(19) **Europäisches Patentamt / European Patent Office / Office européen des brevets**

(11) **EP 4 641 450 A1**

(12) **EUROPEAN PATENT APPLICATION**

(43) Date of publication:
**29.10.2025 Bulletin 2025/44**

(21) Application number: **25169723.1**

(22) Date of filing: **10.04.2025**

(51) International Patent Classification (IPC):
**G06N 5/022** (2023.01)  **G06N 3/042** (2023.01)
**G06N 3/045** (2023.01)  **G06N 3/0475** (2023.01)
**G06Q 10/00** (2023.01)  **G06F 40/00** (2020.01)
**G06F 40/56** (2020.01)  **G06F 40/284** (2020.01)

(52) Cooperative Patent Classification (CPC):
**G06N 3/042; G06F 40/00; G06F 40/20;
G06F 40/30; G06N 3/045; G06N 3/0475;
G06N 5/022; G06Q 10/00**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **25.04.2024  CH 4542024**

(71) Applicant: **Benetics AG
8002 Zürich (CH)**

(72) Inventors:
- **Shon, Aaaron Patrick
  8038 Zürich (CH)**
- **Bayerle, Michael
  8050 Zürich (CH)**

(74) Representative: **Rentsch Partner AG
Kirchenweg 8
Postfach
8034 Zürich (CH)**

(54) **SYSTEM AND METHOD FOR PROCESSING CONSTRUCTION DATA**

(57)   A construction knowledge base comprises structured construction data, arranged in a knowledge graph ($G$) with entities and relations between the entities. A user query ($X$) is mapped to a set of entity relations ($\hat{R}$) using a first generator model ($M_d$), trained to map unstructured construction data to structured entity relations. A subgraph ($Z$) is retrieved from the knowledge graph ($G$), using the set of entity relations for the query ($\hat{R}$). The subgraph ($Z$) is mapped to unstructured data ($Y$) as output for the query, using a second generator model ($M_g$), inverse to the first generator model ($M_d$) and trained to map structured entity relations to unstructured construction data. The generator models ($M_g$, ($M_d$)) are trained for cycle consistency, whereby structured entity relations output by the first generator model ($M_d$) are input to the second generator model ($M_g$), and unstructured data output by the second generator model ($M_g$) is input to the first generator model ($M_d$).

**Fig. 3**

EP 4 641 450 A1

**Description**

FIELD OF THE DISCLOSURE

The present disclosure relates to a system and a method for processing construction data. Specifically, the present disclosure relates to a computer system and a computer-implemented method for processing construction data, particularly for structuring and utilizing construction related data.

BACKGROUND OF THE DISCLOSURE

In today's ever-evolving landscape of construction, encompassing building construction, civil engineering, and construction engineering in other areas of technology, such as aviation, maritime, railway or automotive industry, the meticulous integration and processing of diverse data sets have become pivotal to the advancement of the industry. With the continuous influx of both structured and unstructured information - ranging from architectural schemas, engineering specifications, designs, drawings, project plans and schedules, cost information, and even geographical data for infrastructure projects like roadways, tunnels, and bridges to the complex operational details pertaining to the construction of airplanes, ships, trains, and automobiles - the ability to efficiently process, analyze, and utilize this data represents a cornerstone in enhancing the quality, safety, and efficiency of construction engineering projects. Acknowledging the multifaceted nature of these challenges, required is an innovative solution that addresses the intricate demands linked with the acquisition, organization, querying, utilization and application of such data, for facilitating better decision-making processes, optimizing construction workflows, and ultimately contributing to the pioneering transformation of the construction and civil engineering sectors. The potential of large-scale artificial intelligence applications, particularly those relying on cutting-edge algorithms like large language models (LLM) and transformer models, to revolutionize this management process is profound. These AI-driven systems promise to untangle the intricacies of data by delivering insights, predicting trends, and facilitating real-time decision-making in highly complex environments. However, amidst the advancements, one critical challenge that persists is the propensity of these intelligent models to generate non-factual outputs or "hallucinations," which can lead to misinformed decisions and potentially catastrophic outcomes in precision-oriented and/or safety-related construction contexts.

SUMMARY OF THE DISCLOSURE

It is an object of this disclosure to provide a computer system and a computer-implemented method for processing construction data. In particular, it is an object of the present disclosure to provide a computer system and a computer-implemented method for processing construction data, which system and method do not have at least some of the disadvantages of the prior art. More particularly, it is an object of the present disclosure to provide a computer system and a computer-implemented method for processing construction data, which includes structured data, defined with sets of entity relations, and unstructured construction data, not defined with entity relations. Moreover, it is a particular object of the present disclosure to provide a computer system and a computer-implemented method for processing construction data, which includes structured and unstructured construction data, and supporting querying of the construction data while preventing hallucinations in query responses.

According to the present disclosure, these objects are addressed by the features of the independent claims. In addition, further advantageous embodiments follow from the dependent claims and the description.

According to the present disclosure, the above-mentioned objects are particularly achieved in that a computer system for processing construction data comprises one or more processors configured to execute the following steps: receiving from a user a query related to a construction knowledge base comprising structured construction data, arranged in a knowledge graph with nodes and edges, the nodes representing entities and the edges representing relations between the entities; mapping the query to a set of entity relations for the query, using a first generator model trained to map unstructured construction data, not defined with entity relations, to structured entity relations; retrieving from the knowledge graph a subgraph, using the set of entity relations for the query; mapping the subgraph to unstructured data as output for the query, using a second generator model trained to map structured entity relations to unstructured construction data, wherein the second generator model is inverse to the first generator model, and the first generator model and the second generator model are trained for cycle consistency, whereby structured entity relations output by the first generator model are input to the second generator model, and unstructured data output by the second generator model is input to the first generator model; and providing to the user the unstructured data output for the query.

In an embodiment, the query comprises natural language input, and the one or more processors are configured to map the natural language input to a sequence of tokens, to use the first generator model to map the sequence of tokens to a set of knowledge graph triples defining the entity relations, and to use the second generator model to map the subgraph to a sequence of tokens defining natural language output for the query.

In an embodiment, the query comprises query input with words of natural language, images, floor plans, architectural drawings, technical drawings, time-dependent graphs, measurement data, audio recordings, and/or video recordings, and the one or more processors are configured to map the query input to a sequence of multimodal tokens, to use the first generator model to map the sequence of multimodal tokens to a set of knowledge graph triples defining the entity relations, and to use the second generator model to map the subgraph to a sequence of multimodal tokens defining the unstructured data output for the query, the unstructured data output for the query comprising words of natural language, images, floor plans, architectural drawings, technical drawings, time-dependent graphs, audio files and/or video files. For example, the measurement data includes point clouds from a laser scan, physical dimension or weight measurements, temperature readings, electrical readings, and the like. In an embodiment, the query comprises query input with measurement amounts related to specific entities In an embodiment, the query comprises query input with cost data related to specific entities.

In an embodiment, the one or more processors are configured to denote each of the entities and the relations in the knowledge graph with a unique token sequence.

In an embodiment, the one or more processors are configured to train the first generator model and the second generator model using a plurality of samples with subgraphs from a training data knowledge graph, by mapping the sample subgraph of each sample to a respective sample output with unstructured data, using the second generator model, mapping the sample output with the unstructured data to a sample set of entity relations, using the first generator model, and forcing minimal differences between the sample subgraphs and the respective sample sets of entity relations.

In an embodiment, the one or more processors are configured to train the first generator model and the second generator model using a plurality of samples of unstructured training data, by mapping the unstructured training data of each sample to a respective output set of entity relations, using the first generator model, mapping the output set of entity relations to a sample output with unstructured data, using the second generator model, and forcing minimal differences between the samples of unstructured training data and the sample output with the unstructured data.

In an embodiment, the one or more processors are configured to train the first generator model and the second generator model using positive reference data, including truthful entity relations and/or truthful unstructured reference data, negative reference data, including false entity relations and/or false unstructured reference data, and anchor data including pairs of truthful entity relations matched with corresponding truthful unstructured reference data.

In an embodiment, the one or more processors are configured to transform the knowledge graph into a set of first-order logic rules, to execute a first-order logic theorem prover to detect contradictions between the set of first-order logic rules derived from the knowledge graph and first-order propositions of the subgraph retrieved for the query from the knowledge graph, and to discard the subgraph if contradictions are detected by the first-order logic theorem prover.

In an embodiment, the first generator model comprises a neural network, the second generator model comprises a neural network, and the one or more processors are configured to determine reliability of output generated by one of the neural networks for a current input to the respective neural network, based on vectorized state information of the respective neural network, the vectorized state information including at least an embedding vector formed by last hidden layer activations of the respective neural network, and to discard the output from the respective neural network if said output is characterized by vectorized state information which has a similarity below a defined similarity threshold with respect to vectorized state information produced by the respective neural net-work for truthful training data.

In an embodiment, the one or more processors are configured to determine the reliability of output generated by one of the neural networks for an input sequence to the respective neural network, based on vectorized state information generated from a series of the vectorized state information produced by the respective neural network for the input sequence.

In an embodiment, the one or more processors are configured to generate a kernel matrix, the kernel matrix relating pairwise truthful sentences to each other, indicating a similarity between pairs of truthful sentences based on embedding vectors formed by last hidden layer activations of the respective neural network for the truthful sentences, and to determine the similarity of vectorized state information, using the kernel matrix.

In addition to the computer system for processing construction data, the present disclosure also relates to a computer-implemented method of processing construction data. The computer-implemented method of processing construction data, comprises the following steps: receiving from a user a query related to a construction knowledge base comprising structured construction data, arranged in a knowledge graph with nodes and edges, the nodes representing entities and the edges representing relations between the entities; mapping the query to a set of entity relations for the query, using a first generator model trained to map unstructured construction data, not defined with entity relations, to structured entity relations; retrieving from the knowledge graph a subgraph, using the set of entity relations for the query; mapping the subgraph to unstructured data as output for the query, using a second generator model trained to map structured entity relations to unstructured construction data, wherein the second generator model is inverse to the first generator model, and the first generator model and the second generator model are trained for cycle consistency, whereby structured entity relations output by the first generator model are input to the second generator model, and unstructured data output by the second generator model is input to the first generator model; and providing to the user the unstructured data output for the query.

In further embodiments, the embodiments described above in connection with the computer system for processing construction data are also applicable to the computer-implemented method of processing construction data in that the computer-implemented method of processing construction data further includes characteristics of the embodiments described above in connection with the computer system.

In addition to the system and method for processing construction data, the present disclosure also relates to a computer program product comprising a non-transitory computer readable medium having stored thereon computer program code configured to direct one or more processors of a computer system to perform the following steps: receiving from a user a query related to a construction knowledge base comprising structured construction data, arranged in a knowledge graph with nodes and edges, the nodes representing entities and the edges representing relations between the entities; mapping the query to a set of entity relations for the query, using a first generator model trained to map unstructured construction data, not defined with entity relations, to structured entity relations; retrieving from the knowledge graph a subgraph, using the set of entity relations for the query; mapping the subgraph to unstructured data as output for the query, using a second generator model trained to map structured entity relations to unstructured construction data, wherein the second generator model is inverse to the first generator model, and the first generator model and the second generator model are trained for cycle consistency, whereby structured entity relations output by the first generator model are input to the second generator model, and unstructured data output by the second generator model is input to the first generator model; and providing to the user the unstructured data output for the query.

In further embodiments, the embodiments described above in connection with the computer system for processing construction data are also applicable to the computer program product in that the non-transitory computer readable medium has stored thereon further computer program code configured to direct the one or more processors of the computer system to perform the embodiments described above in connection with the computer system.

In a further aspect, the present disclosure relates to a computer system for generating and utilizing a technical knowledge base, the computer system comprising one or more processors configured to execute the following steps: generating for the technical knowledge base a knowledge graph with nodes and edges, the nodes representing entities and the edges representing relations between the entities, using a first generator model trained to map unstructured technical knowledge data, not defined with entity relations, to structured entity relations; receiving from a user a query related to the technical knowledge base; mapping the query to a set of entity relations for the query, using the first generator model; retrieving from the knowledge graph a subgraph, using the set of entity relations for the query; mapping the subgraph to unstructured data as output for the query, using a second generator model trained to map structured entity relations to unstructured construction data, wherein the second generator model is inverse to the first generator model, and the first generator model and the second generator model are trained for cycle consistency, whereby structured entity relations output by the first generator model are input to the second generator model, and unstructured data output by the second generator model is input to the first generator model; and providing to the user the unstructured data output for the query. In this further aspect, the embodiments described above in connection with the computer system for processing construction data are also applicable.

In a further aspect, the present disclosure relates to a computer-implemented method of generating and utilizing a technical knowledge base. The computer-implemented method of generating and utilizing a technical knowledge base comprises the following steps: generating for the technical knowledge base a knowledge graph with nodes and edges, the nodes representing entities and the edges representing relations between the entities, using a first generator model trained to map unstructured technical knowledge data, not defined with entity relations, to structured entity relations; receiving from a user a query related to the technical knowledge base; mapping the query to a set of entity relations for the query, using the first generator model; retrieving from the knowledge graph a subgraph, using the set of entity relations for the query; mapping the subgraph to unstructured data as output for the query, using a second generator model trained to map structured entity relations to unstructured construction data, wherein the second generator model is inverse to the first generator model, and the first generator model and the second generator model are trained for cycle consistency, whereby structured entity relations output by the first generator model are input to the second generator model, and unstructured data output by the second generator model is input to the first generator model; and providing to the user the unstructured data output for the query. In further embodiments, the embodiments described above in connection with the computer system for processing construction data are also applicable to the computer-implemented method of generating and utilizing a technical knowledge base in that the computer-implemented method of generating and utilizing a technical knowledge base further comprises characteristics of the embodiments described above in connection with the computer system for processing construction data.

In a further aspect, the present disclosure relates to a computer program product comprising a non-transitory computer readable medium having stored thereon computer program code configured to direct one or more processors of a computer system to perform the following steps: generating for a technical knowledge base a knowledge graph with nodes and edges, the nodes representing entities and the edges representing relations between the entities, using a first generator model trained to map unstructured technical knowledge data, not defined with entity relations, to structured entity relations; receiving from a user a query related to the technical knowledge base; mapping the query to a set of entity relations for the query, using the first generator model; retrieving from the knowledge graph a subgraph, using the set of entity relations for the query; mapping the subgraph to unstructured data as output for the query, using a second generator model trained to map structured entity relations to unstructured construction data, wherein the second generator model is inverse to the first generator model, and the first generator model and the second generator model are trained for cycle consistency, whereby structured entity relations output by the first generator model are input to the second generator model, and unstructured data output by the second generator model is input to the first generator model; and providing to the user the unstructured data output for the query. In further embodiments, the embodiments described above in connection with the computer system for processing construction data are also applicable to the computer program product in that the non-transitory computer readable medium has stored thereon further computer program code configured to direct the one or more processors of the computer system to perform the embodiments described above in connection with the computer system.

BRIEF DESCRIPTION OF THE DRAWINGS

The present disclosure will be explained in more detail, by way of example, with reference to the drawings in which:

Figure 1:    shows a block diagram illustrating schematically a computer system for processing construction data connected via a network to user devices.

Figure 2:    shows a flow diagram illustrating an exemplary sequence of steps for processing construction data.

Figures 3 and 4:    show flow diagrams illustrating exemplary sequences of steps for processing a user query related to a construction knowledge base using generator models.

Figures 5 and 6:    show flow diagrams illustrating exemplary sequences of steps for processing unstructured data for expanding a construction knowledge base using a generator model.

Figures 7 and 8:    show flow diagrams illustrating exemplary sequences of steps for training generator models for cycle consistency using samples from a structured training knowledge base.

Figures 9 and 10:    show flow diagrams illustrating exemplary sequences of steps for training generator models for cycle consistency using samples of unstructured training data.

Figure 11:    shows a flow diagram illustrating an exemplary sequence of steps for preventing hallucinations using first order logic and theorem provers.

Figure 12:    shows a flow diagram illustrating an exemplary sequence of steps for preventing hallucinations using a kernel method.

Figure 13:    shows a flow diagram illustrating an exemplary sequence of steps for preventing hallucinations using first order logic and theorem provers in combination with a kernel method.

Figure 14:    shows a block diagram illustrating schematically a neural network with an input layer, hidden layers, and an output layer.

Figure 15:    shows a graph illustrating schematically a tow-dimensional projection of an embedding space induced by the last hidden layer of a neural network.

DETAILED DESCRIPTION OF THE EMBODIMENTS

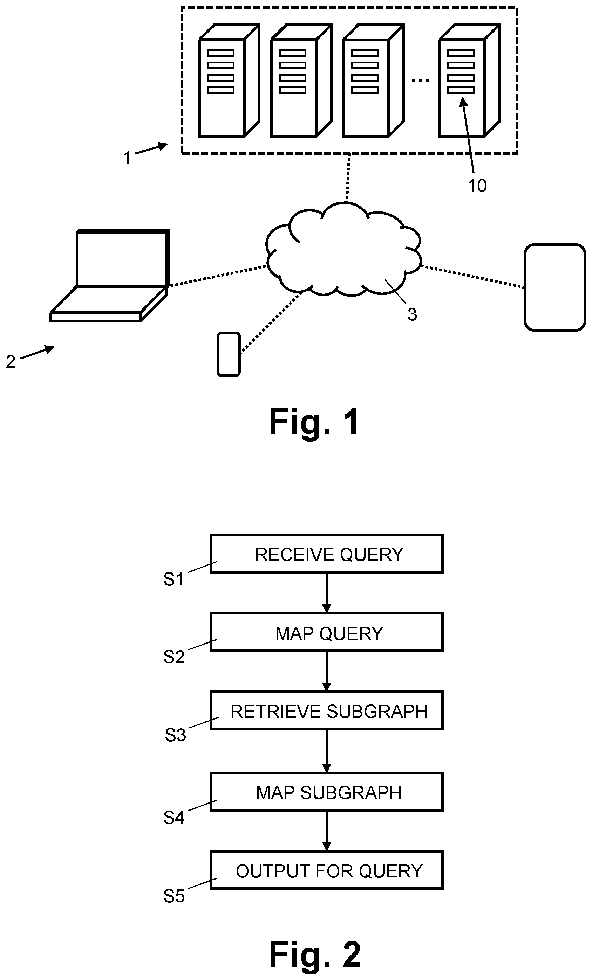

In Figure 1, reference numeral 1 refers to a computer system comprising one or more computers with one or more processors 10. As illustrated in Figure 1, the computer system 1 is connected to a network 3 and configured for data communication with computing devices 2 of users via the network 3. The network 3 includes wireless networks, such as mobile radio communication networks and wireless local area networks, and wired connection networks, such as wired local area networks and other communication networks. The network 3 includes the Internet. For example, the computer system 1 is a cloud-based computer system. The computing devices 2 include personal computers, e.g. mobile laptops or stationary desktop computers, tablet computers, mobile communication devices, such as smart phones, smart watches, or the likes. The computing devices 2 comprise one or more processors.

The computer system 1 comprises a data storage system configured for storing computer program code and application data, particularly data related to construction, including building construction, civil engineering, and construction engineering in other areas of technology, such as aviation, maritime, railway or automotive industry. The computer program code is configured to control the one or more processors 10 of the computer system 1 to execute functions and operations, described below in more detail with reference to Figures 2-12.

As will be explained below in more detail, the computer system 1 is configured to maximize the probability of an output sequence $Y$ given an input sequence (also called a "prompt" or "query") $X$, $p(Y|X)$. The output sequence $Y$ is generated by combining a knowledge graph $G$ with other model parameters and the input sequence $X$. The query $X$ retrieves a relevant subgraph $Z \subsetneq G$ from the knowledge graph $G$. Building on retrieval-augmented generation (RAG), $Z$ is treated as an unseen, latent variable that is marginalized out when computing the probability of $Y$ given $X$. The probability of each token $y_t$ in the output sequence $Y$ is treated as depending on the entire query $X$, the previous output tokens $y_{0:t-1}$, and each subgraph $Z$ (weighted by the probability that $Z$ is relevant to answering $X$):

$$p(\mathbf{y}|\mathbf{x}) = \sum_{\mathcal{Z} \subsetneq \mathcal{G}} p_\phi(\mathcal{Z}|\mathbf{x}) p_\theta(\mathbf{y}|\mathbf{x}, \mathcal{Z}) = \sum_{\mathcal{Z} \subseteq \mathcal{G}} p_\phi(\mathcal{Z}|\mathbf{x}) \prod_{t=1}^{T} p_\theta(y_t|\mathbf{x}, \mathcal{Z}, \mathbf{y}_{0:t-1}) \qquad (1)$$

The knowledge graph G is defined as a collection of nodes and edges. Each node represents an entity e from a set of entities $E = \{e_0 \dots e_{N-1}\}$. Directed edges on the graph represent relations r between a "head entity" or "subject" $e_s$ and a "tail entity" or "object" $e_o$. A knowledge graph triplet $\tau$ is defined as a relation, a subject, and an object: $r(e_s, e_o)$.

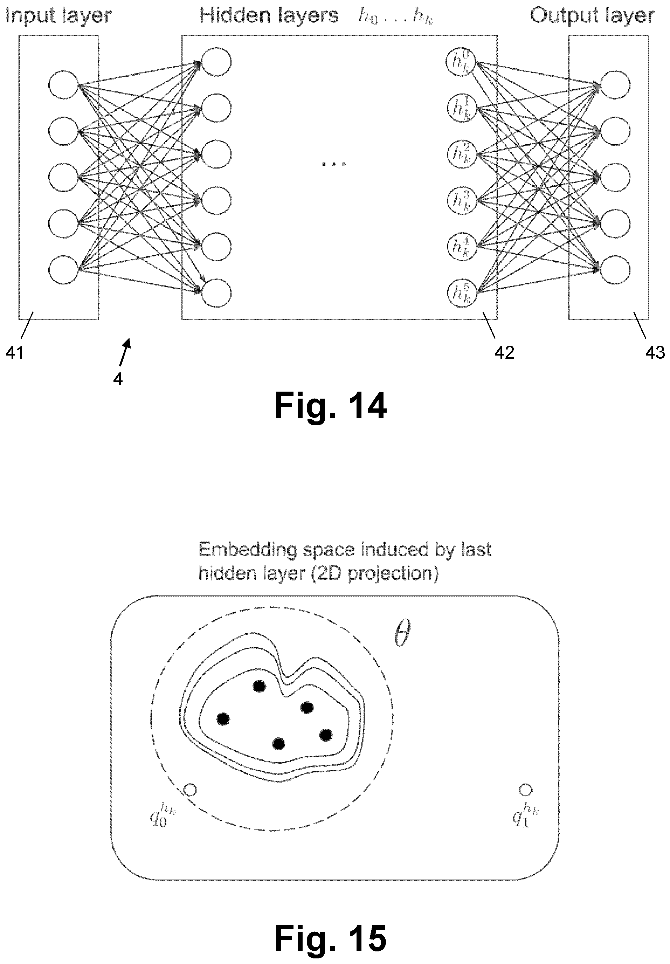

As illustrated in Figure 14, the computer program code is configured to control the one or more processors 10 of the computer system 1 to implement and execute one or more neural networks 4, which comprise an input layer 41, hidden layers 42, including hidden layers $h_0 \dots h_k$, and an output layer 43. As will be described later in more detail, the computer program code is configured to control the one or more processors 10 of the computer system 1 to implement and execute a first generator model $M_d$ and a second generator model $M_g$ which are inverses of each other. The first generator model $M_d$ is trained to translate unstructured data into knowledge graph triplets and the second generator model $M_g$ is trained to generate unstructured data tokens from knowledge graph triplets. The first generator model $M_d$ and the second generator model $M_g$ are trained for cycle consistency, whereby structured entity relations output by the first generator model $M_d$ are input to the second generator model $M_g$, and unstructured data output by the second generator model $M_g$ is input to the first generator model $M_d$. The two generator models $M_d$, $M_g$ are used for inference in two separate modes. In RAG mode (Retrieval-Augmented Generation), the models are used together to retrieve data from a structured knowledge base and output the data in unstructured form. In data ingestion mode, $M_d$ is used to expand the knowledge graph given an unstructured source of data.

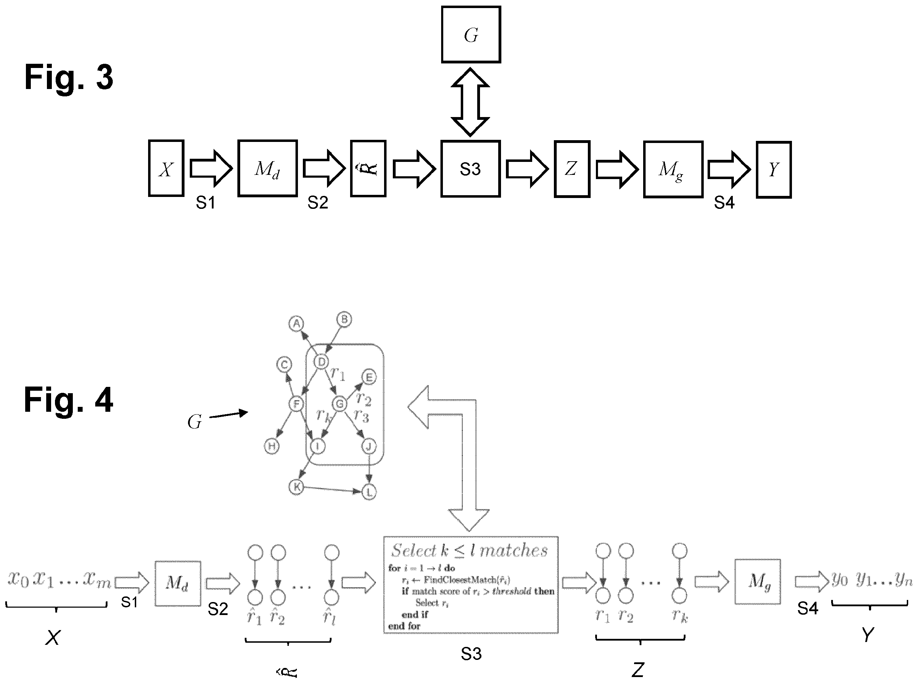

In RAG mode, the computer system 1 generates unstructured information $Y$ given some unstructured query $X$. The first generator model $M_d$ and second generator model $M_g$ are trained to generate truthful information and not to hallucinate. During inference in RAG mode, the incoming prompt $X = x_0 \dots x_{t-1}$ and the current model output $Y = y_0 \dots y_{t-1}$ with a subgraph $Z \subseteq G$ that is relevant to the "context" of $X$, $Y$. The first generator model $M_d$ determines which KG relations to include in $Z$. The process of retrieving $Z$ from $G$ at any given point in time is illustrated in Figures 3 and 4 and outlined in the algorithm below:

---

**Algorithm 1** Infer output sequence $y_0 \dots y_{t-1}$ given $x_0 \dots x_t$, $\mathcal{G}$

---

**Input:** Knowledge graph $\mathcal{G}$, document model $M_d$, KG model $M_g$, prompt $\mathbf{x}$

1:  **procedure** INFER($\mathbf{x}, \mathcal{Z}$)
2:     Compute knowledge graph embedding $\hat{\mathbf{r}} = \{\hat{r}_0 \dots \hat{r}_l\}$ given current $x_t$ and past state $y_0 \dots y_{t-1}$ using model $M_d$.
3:     Select $k$ ($k \leq l$) subgraphs $\mathbf{r} = \{r_1 \dots r_k\}$ using $\hat{\mathbf{r}}$.
4:     Compute token embedding and next output token $y_t$ given $\mathbf{r}, x_t, y_0 \dots y_{t-1}$ using $M_g$.
5:     Compute probability of "truthfulness" using embedding vector from $M_g$ and the kernel technique described below in 3.7.
6: **end procedure**

**Output:** Output sequence $\mathbf{y} = y_0 \dots y_{t-1}$, output subgraphs $\mathbf{r}$

---

In the following paragraphs, described with reference to Figures 2-4 are possible sequences of steps performed by the one or more processors 10 of the computer system 1 for processing construction data, particularly for processing a user query related to a construction knowledge base.

As illustrated in Figures 2 to 4, in step S1, the computer system 1 receives a query $X = x_0 ... x_{t-1}$ from a user or from the user's computing device 2, respectively. The query $X$ relates to a construction knowledge base comprising structured construction data, arranged in a knowledge graph $G$. As illustrated in Figures 4, 6, 8, the knowledge graph $G$ comprises nodes $A$-$L$ and edges $r_1$-$r_4$, whereby the nodes $A$-$L$ represent entities and the edges $r_1$-$r_4$ represent relations between these entities $A$-$L$.

For example, in the construction domain, particularly in the building construction domain, entities include, but are not limited to: tasks, e.g. "install electrical cables", "pour concrete", "install electrical sockets", "connect circuit breaker panel to mains power", etc.; materials, e.g. "cable FE0 4x1.5mm$^2$", "RC-Concrete mix", "rough sawn 100mm x 100mm untreated lumber", etc.; locations, including specific addresses or latitude/longitude/height coordinates; equipment, e.g. "Condecta Oberdreherkran Euro SSG 160", "DeWalt 20V MAX Brushless Cordless 1/2 inch Hammer Drill", etc.; reports, e.g. roof inspection reports, daily progress reports, requests for information (RFIs) and their responses, etc.; people, e.g. named either according to proper name ("John Smith"), profession ("electrician"), and/or role ("project lead", "apprentice electrician"); Events, e.g. "workplan completion for subsection 5", "completion of electrical buildout on floor 3 section 4", "onsite health and safety incident #5K23"; recorded data, such as measurements or photographs, e.g. a point-cloud laser scan of a room interior, photograph of a report; and/or projects, e.g. "P30921 schoolhouse foundation" or "Project 2209, shopping mall electrical system at 123 Birdseye Drive Building #4".

Examples of relations in the construction domain, particularly in the building construction domain, include, but are not limited to: temporal relations, such as "before" or "after", e.g. "task 23 Site preparation must happen BEFORE Task 56 Dig foundation" (for example, this can be defined using a predicate expression such as: "Required Before(Task_23, Task_56)"); amounts and costs, e.g. "500m of cable type FE0 4x1.5mm$^2$ at \$1,500", "baseline pay for an apprentice electrician at USD 60/hour", "Employee #45 Smith billed 5 hours with role Electrician" (for example, such relations can be defined by expressions such as "Costs(Cable_type_FE0_4x15mm$^2$, 500m, USD 1500)" or, depending on actual pricing models, "CostsPerMeter(Cable_type_FE0_4x15mm$^2$, USD 3)"); actions performed by a person or system, possibly on an object, e.g. "employee #123 Smith INSTALLED Electrical panel #245 in Floor 5 Section 7" (for example, such relations can be defined by expressions such as "Installed(Employee_123, Electrical_panel_245)" or "In(Electrical_panel_245, Floor_5_Section_7)"); comparative values or ranges, as a generalization of amounts and costs, e.g. "the 'install electrical panel' task typically requires between 2 and 3.5 hours" (for example this relation can be defined by an expression such as "requires_time_range('Install electrical panel', [2h - 3.5h]").

Herein, entity relations are also referred to as "knowledge graph triplets". In an embodiment, the computer system 1 denotes each of the entities and the relations in the knowledge graph with a unique token sequence (labeling). The query $X$ comprises natural language input, and the computer system 1 maps the natural language input to a sequence of tokens $x_0 ... x_{t-1}$. Depending on the embodiment and/or application, the query comprises words of natural language, images, floor plans, architectural drawings, technical drawings, time-dependent graphs, measurement data, audio recordings, and/or video recordings. For example, the measurement data includes point clouds from a laser scan, physical dimension or weight measurements, temperature readings, electrical readings, and the like. In an embodiment, the query comprises measurement amounts related to specific entities In an embodiment, the query further comprises cost data related to specific entities. Correspondingly, the computer system 1 maps the query input to a sequence of multimodal tokens $x_0 ... x_{t-1}$.

It is noted here, for example, that time-dependent graph structures commonly used in the construction industry, such as Gantt charts, are mapped to a sequence of multimodal tokens as knowledge graph triplets can model temporal logic propositions (see https://en.wikipedia.org/wiki/Temporal logic#Temporal operators). This facilitates improved responses to questions such as "What's the earliest date I can schedule the water pipe installation on project X?" by using a knowledge graph relation based on the $\psi$ or "Until" operator from temporal logic, that define that the water pipes cannot be installed until the foundation has been poured. Without using graph structures involving temporal operators, a large language model (LLM) would need to see a sufficient number of training examples from natural-language text to teach it about the time-ordered dependency between the foundation being poured and the water pipes being installed.

In step S2, the computer system 1 maps the received query $X$ to a set of entity relations $\hat{R}$ with a set of candidate knowledge graph triplets $\hat{R} = \{\hat{r}_1, \hat{r}_2, ..., \hat{r}_l\}$, using the first generator model $M_d$. More specifically, the computer system 1 uses the first generator model $M_d$ to map the sequence of tokens and/or multimodal tokens $X = x_0 ... x_{t-1}$ to the set of knowledge graph triples triplets $\{\hat{r}_1, \hat{r}_2, ..., \hat{r}_l\}$ defining the entity relations $\hat{R}$. As will be described later in more detail, the first generator model $M_d$ is trained to map unstructured construction data, not defined with entity relations, to structured entity relations.

In step S3, the computer system 1 retrieves from the knowledge graph $G$ a subgraph $Z$ with the closest subgraph triplets $\{r_1, r_2, ...r_k\}$ from the knowledge graph $G$, using the set of entity relations $\hat{R}$ for the query $X$. In other words, the candidate knowledge graph triplets $\{r_1, r_2, ...r_k\}$ are used to retrieve the $k$ ($k \leq l$) closest subgraph triplets from the knowledge graph $G$.

In step S4, using the second generator model $M_g$, the computer system 1 maps the retrieved subgraph Z to unstructured data $Y = y_0, y_1, ... y_n$, as output for the query X. In other words, the set of k triplets is passed to the second generator model $M_g$ which creates a set of output tokens $Y = \{y_0, y_1, ...y_n\}$. As will be described later in more detail, the second generator model $M_g$ is trained to map structured entity relations to unstructured construction data, not defined with entity relations. As will be further explained in more detail, the second generator model $M_g$ is trained to produce factually correct information without hallucination. More specifically, the computer system 1 uses the second generator model $M_g$ to map the subgraph Z to a sequence of tokens $y_0, v_1, ... y_n$ defining natural language output for the query. As indicated above, depending on the embodiment and/or application, the computer system 1 uses the second generator model $M_g$ to map the subgraph Z to a sequence of multimodal tokens $y_0, y_1, ... y_n$ defining the unstructured data output for the query. Correspondingly, the unstructured data output for the query comprises words of natural language, images, floor plans, architectural drawings, technical drawings, time-dependent graphs, audio files, and/or video files.

In step S5, the computer system 1 provides to the user or the user's computing device 2, respectively, the unstructured data output Y for the query X. For example, the unstructured data output Y is transmitted via network 3 to the user's computing device 2 for display on a screen of the computing device 2 and/or for rendering via speaker(s) or headphones of the computing device 2.

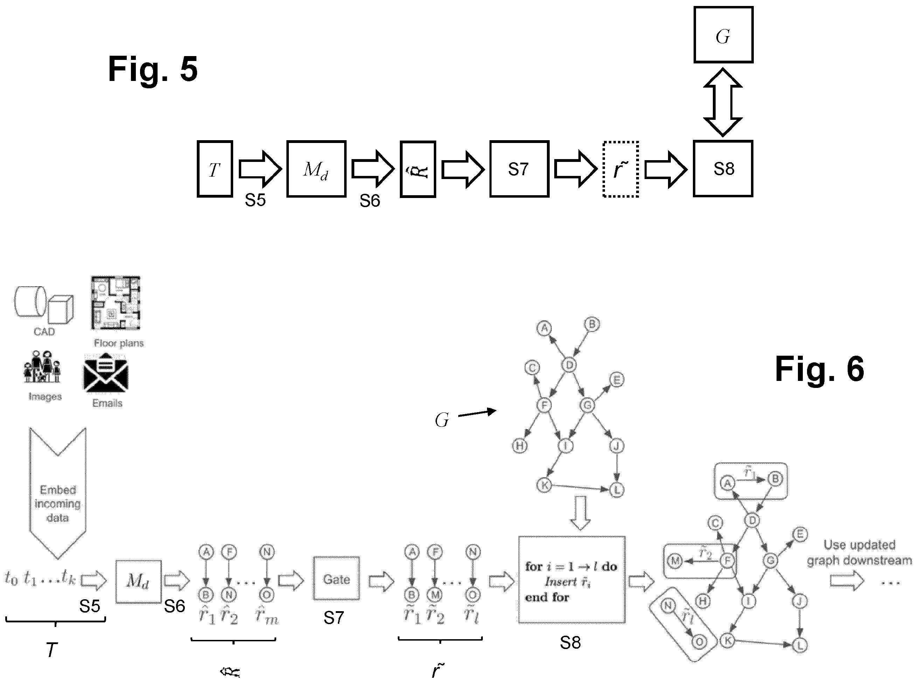

In data ingestion mode, the computer system 1 uses the first generator model $M_d$ to expand the knowledge graph. Given a new piece of unstructured information (e.g. an email, an image, a technical drawing, etc.), the first generator model $M_d$ processes the encoding of this data and translates it into knowledge graph triplets. The knowledge graph triplets are used to expand the existing knowledge base or its knowledge graph G, respectively, and can be used in downstream applications, i.e. when the computer system 1 operates in RAG mode again, when structured information can be retrieved from a richer knowledge base and more accurate and more up-to-date information can be generated. An illustration of the data ingestion mode is provided in Figures 5 and 6.

In the following paragraphs, described with reference to Figures 5 and 6 are possible sequences of steps performed by the one or more processors 10 of the computer system 1 for processing construction data, particularly for expanding the construction knowledge base or its knowledge graph G, respectively.

As illustrated in Figures 5 and 6, in step S5, the computer system 1 maps or embeds a received data object T into a set of tokens $\{t_0, t_1, ...t_k\}$, e.g. multimodal tokens.

In step S6, using the first generator model $M_d$, the computer system 1 maps this set of tokens $T = \{t_0, t_1, ...t_k\}$ to a set of knowledge graph triplets $\hat{R} = \{\hat{r}_1, \hat{r}_2, ..., \hat{r}_m\}$.

In step S7, the computer system 1 assesses probabilistically, e.g. by implementing and executing a gate function, whether the generated triplets $\hat{R} = \{r'_1, \hat{r}_2, ..., r_{-m}\}$ are trustworthy. The computer system 1 produces a set of filtered and thus trusted knowledge graph triplets $\tilde{r} = \{\tilde{r}_1, \tilde{r}_2, ..., \tilde{r}_l\}$, where $l \leq m$, e.g. as output from the gate function.

In step S8, the computer system 1 expands the existing knowledge graph G, by adding the trustworthy set of knowledge graph triplets $\tilde{r} = \{\tilde{r}_1, \tilde{r}_2, ..., \tilde{r}_l\}$ to the knowledge graph G.

As mentioned above, the first generator model $M_d$ and the second generator model $M_g$ are inverses of each other. $M_d$ is trained (and learns) to map token sequences (unstructured data) to sequences of logical relations between entities (knowledge graph triplets). $M_g$ is trained (and learns) the inverse mapping, from knowledge graph triplets to unstructured data. Unstructured data can be ingested and generated in the form of natural language, images, floor plans, mechanical drawings, measurement data, audio recordings, video recordings and any other source of digital data, which can be tokenized into an embedding by a deep neural network implemented and executed by the computer system 1. Upon training of the first generator model $M_d$ and the second generator model $M_g$, the computer system 1 not only outputs a stream of unstructured data, e.g. natural language, but rather maps a domain of structured knowledge, represented as a knowledge graph G, to a domain of unstructured data Y, while preserving the semantics of the structured source of data and not hallucinating additional or wrongful information.

The computer system 1 implements and executes, cycle consistent training of the first generator model $M_d$, which maps from unstructured data (not defined with entity relations, e.g. natural language) to structured data (entity relations, e.g. in a knowledge graph), and the second generator model $M_g$, which maps from structured data to unstructured data; whereby, the output of the second generator model $M_g$ is used as input to first generator model $M_d$, and the output of $M_d$ is compared to the initial input to $M_g$. By forcing the initial input and final output to be close to each other, the generator models $M_d$, $M_g$ are trained to only output information, which is necessary to answer a certain query. That is, if $M_g$ were to hallucinate data, the output of $M_d$ would be far off from the initial input. During this training by the computer system 1, the first generator model $M_d$ is lead to find a good embedding for unstructured data, e.g. text sequences, having a truthful correspondence to the real world, whereas the second generator model $M_g$ is lead to find a good embedding for knowledge graph triplets, having truthful relationships between entities that correspond to the real world. Starting from a small set of known good examples, e.g. truthful documents and/or truthful graph triplets, the first generator model $M_d$ and the second generator model $M_g$ are directed and trained to work together to determine the boundary between truth and distortion in their respective two embedding spaces. Furthermore, by training the models $M_d$, $M_g$ with contrastive learning in this circular, iterative manner, each model $M_d$, $M_g$ learns an embedding that separates the positive (truthful) examples from the negative (false) examples in both sequence and knowledge graph embedding spaces. It is pointed out, that the training process, described in more detail below, works even if the initial set of documents or knowledge graph $G$ are sparsely populated, albeit with diminished performance.

The computer system 1 is configured to employ and execute a two-way cyclic training cycle, whereby computer system 1 alternates between forward cycle training (step) and backward cycle training (step) to ensure that the first generator model $M_d$ and the second generator model $M_g$ are trained simultaneously. The respective training steps are outlined in the following paragraphs and in algorithm 2. The person skilled in the art will understand that for training the first generator model $M_d$ and the second generator model $M_g$, the forward cycle training (step) and backward cycle training (step) are repeated numerous times, e.g. until a pre-defined number of repetitions or steps have been executed and/or until a pre-defined condiction has been met. For example, the computer system 1 repeatedly executes the forward cycle training (step) and the backward cycle training (step) until either a defined number of training iterations has been executed, e.g. 10'000 "epochs", where each epoch up-dates the model parameters by considering each training example once, or a combined reconstruction error of both the first generator model $M_d$ and the second generator model $M_g$ drops below a threshold Error_{combined} < Error_{$M_d$} + Error_{$M_g$}. In an embodiment, a set of error (or loss) terms defines the Error_ {$M_d$} of the first generator model $M_d$ as the number of incorrect subgraphs retrieved by first generator model $M_d$, evaluated under the training data, and the Error_{$M_g$} of the second generator model $M_g$ as the number of errors (word-level errors or sentence-level errors) produced by the second generator model $M_g$, evaluated under the training data. In an alternative embodiment, another language model is used to evaluate the Error_{$M_g$} of the second generator model $M_g$ during training, such as the BLEURT metric (https://research.google/blog/evaluating-natural-language-generation-with-bleurt/).

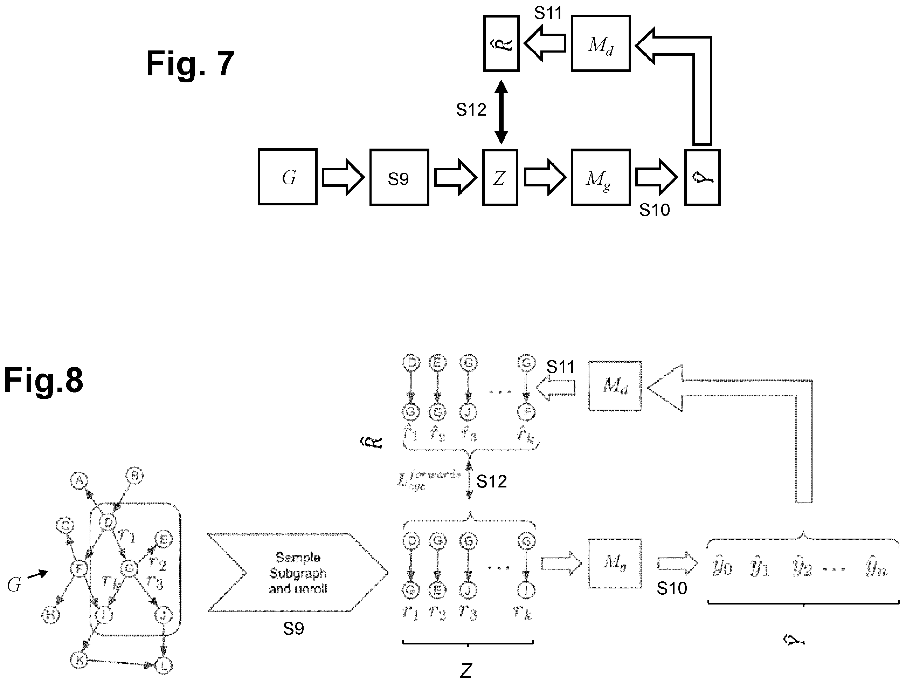

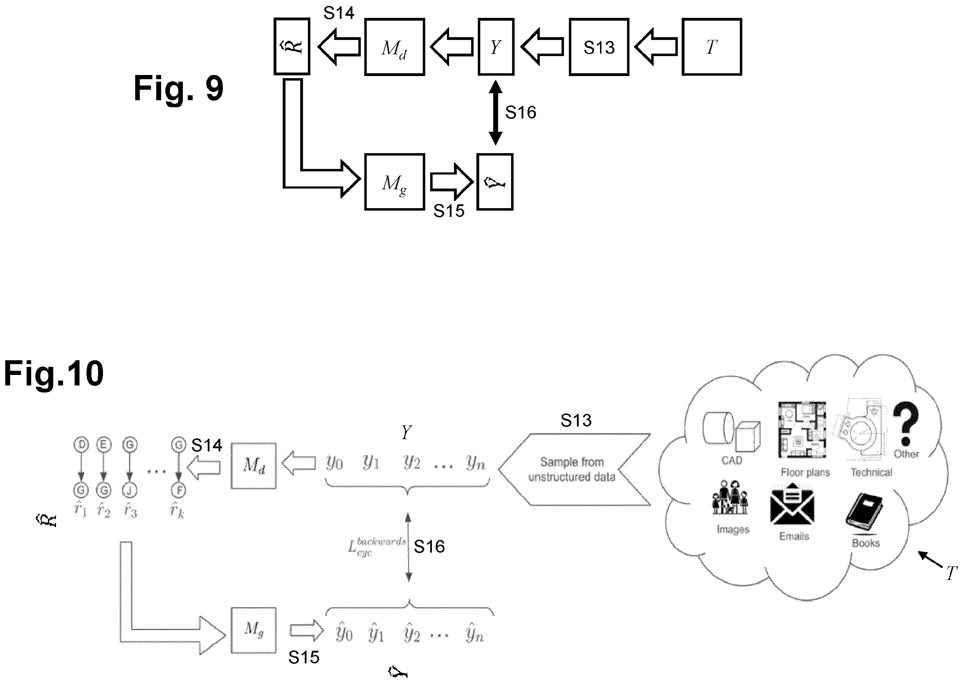

In the following paragraphs, described with reference to Figures 7 to 10 are possible sequences of steps performed by the one or more processors 10 of the computer system 1 for training the first generator model $M_d$ and the second generator model $M_g$ for cycle consistency. More specifically, Figures 7 and 8 illustrate possible sequences of steps performed by the computer system 1 for forward cycle training of the first generator model $M_d$ and the second generator model $M_g$; Figures 9 and 10 illustrate possible sequences of steps performed by the computer system 1 for backward cycle training of the first generator model $M_d$ and the second generator model $M_g$.

As illustrated in Figures 7 and 8, in step S9, the computer system 1 determines and retrieves a sample $Z$ from the knowledge graph $G$. Depending on the embodiment or phase, the knowledge graph $G$ is an initial knowledge graph $G$ with training data or initially established truthful data. The sample $Z$ constitutes a subgraph with a set of triplets $\{r_1, r_2, ...r_k\}$ of the knowledge graph $G$.

In step S10, using the second generator model $M_g$, the computer system 1 maps this sample subgraph $Z$ of the knowledge graph $G$, i.e. the set of triplets $\{r_1, r_2, ...r_k\}$ of the sample subgraph $Z$, to a respective sample output $\hat{Y}$ with unstructured data comprising a sequence of tokens $\hat{Y} = \{y^\wedge_0, y^\wedge_1, y^\wedge_2, ..., y^\wedge_n\}$.

In step S11, using the first generator model $M_d$, the computer system 1 maps the sample output $\hat{Y}$ with the unstructured sequence of tokens $\hat{Y} = \{y^\wedge_0, y^\wedge_1, y^\wedge_2, ..., y^\wedge_n\}$ to a sample set of entity relations $\hat{R}$ comprising a set of triplets $\hat{R} = \{r^\wedge_1, r^\wedge_2, r^\wedge_3, ..., r^\wedge_m\}$.

In step S12, the computer system 1 compares the sample $Z$ subgraph, including the set of triplets $Z = \{r_1, r_2, ...r_k\}$ input to the second generator model $M_g$, with the sample set of entity relations $\hat{R} = \{r^\wedge_1, r^\wedge_2, r^\wedge_3, ..., r^\wedge_m\}$, output by the first generator model $M_d$, to compute the cycle consistency loss $L_{cyc}^{forwards}$.

Repeating steps S9 to S12, using a plurality of samples $Z = \{r_1, r_2, r_3, ...r_k\}$ of the knowledge graph $G$, the computer system 1 performs the forward cycle training of the first generator model $M_d$ and the second generator model $M_g$ and forces the cycle consistency loss $L_{cyc}^{for-wards}$, i.e. difference between the sample subgraphs $Z = \{r_1, r_2, r_3, ...r_k\}$ and the respective output of sample sets of entity relations $\hat{R} = \{\hat{r}_1, \hat{r}_2, \hat{r}_3, ..., \hat{r}_m\}$, to be minimal (ideally zero).

It is noted here that the sampling of knowledge graph triplets does not imply that only single-hop connections are considered for the training. Rather, during the sampling, considered are connections with an arbitrary number of hops. However, any such multi-hop connection can be unrolled into a set of knowledge graph triplets. This choice is thus not restrictive and made without loss of generality.

Described in the following paragraphs is the backward cycle training of the first generator model $M_d$ and the second generator model $M_g$ which is reverse to the forward cycle training described above.

As illustrated in Figures 9 and 10, in step S13, the computer system 1 obtains a sample $T$ of unstructured data from one or more sources of unstructured training data. As illustrated in Figures 9 and 10, the computer system 1 maps or embeds the sample data object $T$ into a set of tokens $\{y_0, y_1, y_2, ...y_n\}$, e.g. multimodal tokens. In other words, computer system 1 samples a series of tokens $T = \{y_0, y_1, y_2, ...y_n\}$ from unstructured training data.

In step S14, using the first generator model $M_d$, the computer system 1 maps the unstructured training data $T$ to a respective output set of entity relations $\hat{R}$. In other words, the set of tokens $T = \{y_0, y_1, y_2, ... y_n\}$ of the unstructured training date sample is mapped to a sample output set of knowledge graph triplets $\hat{R} = \{\hat{r}_1, r^\wedge_2, r^\wedge_3, ..., \hat{r}_k\}$.

In step S15, using the second generator model $M_g$, the computer system 1 maps the output set of entity relations $\hat{R}$ to a sample output with unstructured data $\hat{Y}$. In other words, the sample output set of knowledge graph triplets $\hat{R} = \{\hat{r}_1, r^\wedge_2, r^\wedge_3, ..., \hat{r}_k\}$ is mapped to an unstructured sequence of tokens $\hat{Y} = \{\hat{y}_0, \hat{y}_1, \hat{y}_2, ..., \hat{y}_n\}$.

In step S16, the computer system 1 compares the sample of unstructured training data $T$, including the set of tokens $T = \{y_0, y_1, y_2, ...y_n\}$ of the unstructured training data sample, input to the first generator model $M_d$, with the sample output with unstructured data $\hat{Y}$, including the sequence of tokens $\hat{Y} = \{\hat{y}_0, \hat{y}_1, \hat{y}_2, ..., \hat{y}_n\}$, output by the second generator model $M_g$, to compute the cycle consistency loss $L_{cyc}^{backwards}$.

Repeating steps S13 to S16, using a plurality of samples $T = \{y_0, y_1, y_2, ...y_n\}$ of the unstructured training data, the computer system 1 performs the backward cycle training of the first generator model $M_d$ and the second generator model $M_g$ and forces the cycle consistency loss $L_{cyc}^{backwards}$, i.e. difference between the unstructured training data sample $T = \{y_0, y_1, y_2, ...y_n\}$ and the respective sample output with unstructured data $\hat{Y} = \{\hat{y}_0, \hat{y}_1, \hat{y}_2, ..., \hat{y}_n\}$, to be minimal (ideally zero).

In order to create a powerful domain translation model, representations of members of the domains having favorable properties are relied on. Particularly, distances between dissimilar entities are implemented far in representation space, such that the models $M_d$, $M_g$ can cluster similar objects close together and dissimilar objects far apart.

Because naive encoding of knowledge graph data, e.g. one-hop encoding to encode entities and relations, will result in sparse vectors that are difficult for machine learning algorithms to learn from, the computer system 1 implements a dense encoding for knowledge graph structures.

For the second generator model $M_g$, the computer system 1 employs the following embedding distance d:

$$d\left(\tau;\mathcal{G}\right) = \mathtt{MLP}\left(\left[e_h\|\mathbf{r}\|e_t\right]\right), \qquad e_h = \mathtt{GNN}\left(e_h^0;\mathcal{G}\right)$$

$$\mathbf{r} = \mathtt{GNN}\left(\mathbf{r}^0;\mathcal{G}\right), \qquad e_t = \mathtt{GNN}\left(e_t^0;\mathcal{G}\right)$$

where *GNN* is a graph neural network and *MLP* is a multi-layer perceptron. II denotes concatenation of vector components. Entities and relations are named with unique token sequences.

As to graph embedding, the computer system 1 employs an efficient embedding for knowledge graph relations that is invariant to the order in which entities are considered. For each entity e, applied is a learned affine transformation:

$$\beta\left(f\left(e\right),\mathcal{Z}\right) = \left(1+\gamma\right)\times f\left(e\right)+\delta$$

$$\gamma,\delta = \mathtt{MLP}\left(\eta\right)$$

$$\eta = \mathtt{R}-\mathtt{GNN}\left(f\left(e\right);\mathcal{Z}\right)$$

where $Z$ is a subgraph retrieved from $G$ and $R$ - $GNN$ is a graph neural network that can encode knowledge graph relations. $f$ $(e, Z)$ is a permutation-invariant sequence of knowledge graph entities from $Z$ concatenated with a sequence of input tokens $x0 ... xT$. For example, the permutation-invariant function of Kang et al. (Minki Kang, Jin Myung Kwak, Jinheon Baek, and Sung Ju Hwang, "Knowledge graph-augmented language models for knowledge-grounded dialogue generation", 2023, URL https://doi.org/10.48550/arXiv.2305.188462023) or another permutation-invariant function is used.

The computer system 1 employs the concept of contrastive learning. Contrastive learning is a family of algorithms that attempt to generate "good" embedding for unlabeled or semi-labeled sets of data. The intuitive approach is that the data fall into two classes: "positive" examples drawn from the real distribution we want to model, and "negative" examples drawn from a noise distribution. In the present context, positive examples are either truthful sentences from documents in the training corpus, or else truthful knowledge graph triplets from a known good knowledge graph. Negative examples are untruthful or distorted sentences from a document corpus, or else false or contradictory knowledge graph triplets that do not correspond to real-world truth. Employing contrastive learning contributes to the success of the training pipeline implemented by the computer system1, as the *Cycle consistency loss* relies on positive and negative samples being far apart in the embedding space. In an embodiment, to facilitate contrastive learning, the computer system 1 uses large batch sizes during training for maximum accuracy (see for example Changyou Chen, Jianyi Zhang, Yi Xu, Liqun Chen, Jiali Duan, Yiran Chen, Son Dinh Tran, Belinda Zeng, and Trishul Chilimbi, "Why do we need large batch sizes in contrastive learning? a gradient-bias perspective", In Alice H. Oh, Alekh Agarwal, Danielle Belgrave, and Kyunghyun Cho, editors, Advances in Neural Information Processing Systems, 2022, URL: https://openreview.net/forum?id=T1dhAPdS--).

With regards to model inference, it is noted that the computer system may implement the Retrieval-Augmented Generation (RAG) by injecting a prompt (sequence of tokens) s to the first generator model $M_d$, retrieving a set of relevant knowledge graph triplets $T$ based on s, and then treating the second generator model $M_g$ as a decoder that transforms back from knowledge graph relations to an output sequence s. Furthermore, the first generator model $M_d$ can be employed to expand the structured source of data from unstructured information.

The training data is augmented to create a set of noisy positive and negative examples. Specifically, noise is added to *KG* examples based on techniques from Yang et al. (Yuhao Yang, Chao Huang, Lianghao Xia, and Chenliang Li, "Knowledge graph contrastive learning for recommendation", In SIGIR '22: Proceedings of the 45th International ACM SIGIR Conference on Research and Development in Information Retrieval, pages 1434- -1443, July 2022, URL: https://doi.ora/10.1145/3477495.3532009). Furthermore, noise is added to token sequences based on techniques from Qu et al. (Yanru Qu, Dinghan Shen, Yelong Shen, Sandra Sajeev, Weizhu Chen, and Jiawei Han, "Coda: Contrast-enhanced and diversity-promoting data augmentation for natural language understanding", In International Conference on Learning Representations, 2021, URL: https://openreview.net/forum?id=Ozk9MrX1hvA) and Shen et al. (Dinghan Shen, Mingzhi Zheng, Yelong Shen, Yanru Qu, and Weizhu Chen, "A simple but tough-to-beat data augmentation approach for natural language understanding and generation", 09 2020, URL: https://doi.org/10.48550/arXiv.2009.13818).

The training process described above and illustrated in Figures 5-10 is outlined in the algorithm below:

---

**Algorithm 2** Train models from unstructured documents and knowledge graph

**Input:** Document sentences $\mathcal{S}$, knowledge graph $\mathcal{G}$, document model $M_d$, KG model $M_g$

1: **procedure** GENERATE$(\mathcal{S}, \mathcal{G}, M_d, M_g)$
2:     **for** $i \in 1 \ldots N_{batches}$ **do**
3:         Let $\mathcal{S}_{batch} \leftarrow \{\}$
4:         **for** $j \in 1 \ldots BatchSize$ **do**              ▷ Prefer $BatchSize \geq 256$
5:             $s \leftarrow$ **Sample**$(\mathcal{S} \cup \mathcal{S}_{gen})$     ▷ $\mathcal{S}_{gen}$ are truthful sentences generated by $M_g$
6:             Add augmented $s'_+, s'_-$ to $\mathcal{S}_{batch}$
7:         **end for**
8:         Update$M_d$ using $\mathcal{S}_{batch}$
9:         Use updated $M_d$ to optionally update $\mathcal{T}_{gen}$
10:     **end for**
11:     **for** $i \in 1 \ldots N_{batches}$ **do**
12:         Let $\mathcal{T}_{batch} \leftarrow \{\}$
13:         **for** $j \in 1 \ldots BatchSize$ **do**              ▷ Prefer $BatchSize \geq 256$
14:             $\tau \leftarrow$ **Sample**$(\mathcal{T} \cup \mathcal{T}_{gen})$     ▷ $\mathcal{T}_{gen}$ are truthful KG triplets generated by $M_d$
15:             Add augmented $\tau'_+, \tau'_-$ to $\mathcal{T}_{batch}$
16:         **end for**
17:         Update$M_g$ using $\mathcal{T}_{batch}$
18:         Use updated $M_g$ to optionally update $\mathcal{S}_{gen}$
19:     **end for**
20: **end procedure**

**Output:** Updated models $M'_g$, $M'_d$

---

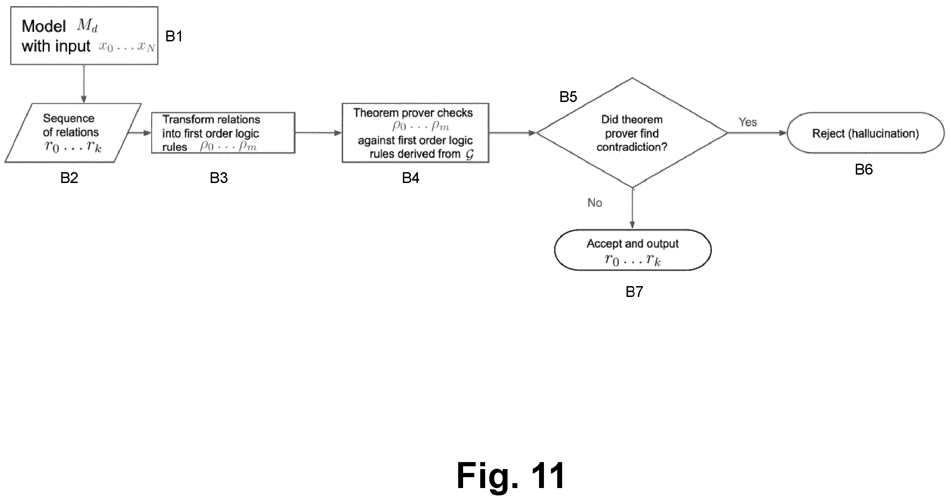

In the following paragraphs, described with reference to Figure 11 are possible sequences of steps (represented by blocks B1...B7) performed by the one or more processors 10 of the computer system 1 for detecting and avoiding hallucinations in the output. In the example, the sequence of steps are directed to the first generator model $M_d$.

As illustrated in Figure 11, block B1 refers to the first generator model $M_d$ with input prompt (query) $X$ with a sequence of tokens $X = \{x_0 \ldots x_N\}$.

Block B2 refers to the sequence of relations $R = \{r_0 \ldots r_k\}$ from the knowledge graph $G$, derived for the input prompt $X = \{x_0 \ldots x_N\}$ by the computer system 1 using the first generator model $M_d$.

Block B3 refers to the computer system 1 transforming the sequence of relations $R = \{r_0 \ldots r_k\}$ from the knowledge graph $G$ into a set of first-order logic propositions $\{\rho_0 \ldots \rho_m\}$. In other words, a set of first-order logic rules $\{\rho_0 \ldots pm\}$ is extracted from the set of knowledge graph relations $R = \{r_0 \ldots r_k\}$. It is noted here that by first-order logic rules meant is a set of quantified logical rules mapping a set of atoms (concrete assignments of variables) from the knowledge graph G to a truth or false value (see for example W. Rautenberg, "A Concise Introduction to Mathematical Logic", Universitext. Springer New York, 2010. ISBN 9781441912213, URL: https://books.google.ch/books?id=vMwixYpQTocC). The person skilled in the art will know various methods of deriving first-order logical propositions from a set of knowledge graph relations $R = \{r_0 \ldots r_k\}$. For examples, see Zeng et al. (Zefan Zeng, Qing Cheng, and Yuehang Si "Logical rule-based knowledge graph reasoning: A comprehensive survey", Mathematics, 11(21): 4486, 2023), Yan et al. (Zuoyu Yan, Tengfei Ma, Liangcai Gao, Zhi Tang, and Chao Chen, "Cycle representation learning for inductive relation prediction", In Kamalika Chaudhuri, Stefanie Jegelka, Le Song, Csaba Szepesvari, Gang Niu, and Sivan Sabato, editors, Proceedings of the 39th International Conference on Machine Learning, volume 162 of Proceedings of Machine Learning Research, pages 24895-24910, PMLR, 17-23 Jul 2022, URL: https://proceedings.mlr.press/v162/yan22a.html), Qu et al. (Meng Qu, Junkun Chen, Louis-Pascal Xhonneux, Yoshua Bengio, and Jian Tang, "Rnnlogic: Learning logic rules for reasoning on knowledge graphs", arXiv preprint arXiv:2010.04029, 2020), Cheng et al. (Kewei Cheng, Jiahao Liu, Wei Wang, and Yizhou Sun, "Rlogic: Recursive logical rule learning from knowledge graphs», In Proceedings of the 28th ACM SIGKDD Conference on Knowledge Discovery and Data Mining, pages 179-189, 2022), Zhang et al. (Wen Zhang, Bibek Paudel, Liang Wang, Jiaoyan Chen, Hai Zhu, Wei Zhang, Abraham Bernstein, and Huajun Chen, "Iteratively learning embeddings and rules for knowledge graph reasoning», In The world wide web conference, pages 2366-2377, 2019), or Bai et al. (Luyi Bai, Wenting Yu, Die Chai, Wenjun Zhao, and Mingzhuo Chen, "Temporal knowledge graphs reasoning with iterative guidance by temporal logical rules", Information Sciences, 621:22-35, 2023).

Block B4 refers to the computer system 1 checking the first-order logic propositions $\{\rho_0 ... \rho_m\}$, generated from the output sequence $R = \{r_0 ... r_k\}$ of the first generator model $M_d$ in response to an input query, using a first-order logic theorem prover to detect contradictions between the set of first-order logic propositions $\{\rho_0 ... \rho_m\}$ and first-order logic rules derived from the known knowledge graph $G$. Contradictions of the newly induced rules against the rules from the known good knowledge graph G suggest hallucination, and thus the corresponding output sequence can be suppressed.

Block B5 refers to the computer system 1 determining whether a contradiction was identified in Block B4. If a contradiction was found, the computer system 1 continues processing in block B6, and rejects the respective sequence of relations $R = \{r_0 ... r_k\}$, derived in block B2 for the input prompt $X = \{x_0 ... x_N\}$; otherwise, if no contradiction was found, the computer system 1 continues processing in block B7 and accepts the sequence of relations $R = \{r_0 ... r_k\}$ derived for the input prompt $X = \{x_0 ... x_N\}$.

Presently available LLM frameworks do not allow for a probabilistic description of their output sequences: the models output a single stream of tokens, with no indication of how likely the sequence is with respect to the distribution induced by the training data. Associating a probability to a model's output, as described below in more detail, makes it possible to discard sequences with a low inferred probability with respect to the training distribution, so that such low-probability sequences are not output to a user. Furthermore, the sequence probability makes it possible to "gate" new training sequences into the training corpus to update the LLM. Low-probability sequences indicate significant deviations from the distribution induced by the training data, and can thus be excluded from further model training.

In one embodiment, associating a probability with the output of an LLM is related to the question of how "faithful" the output of the model is to the known good data used to train the model. In some sense, this corresponds to determining how "aligned", "consistent", or "similar" the model's possibly-novel outputs are with respect to the training data. Figure 14 illustrates a typical deep neural network 4 (architecture), with an input layer 41, multiple hidden layers 42, including hidden layers $h_0 ... h_k$, and an output layer 43. Thus, deep neural networks 4 comprise several layers of units or neurons, with the final layer 43 (typically a linear layer) used to compute the output of the neural network 4. As inputs move from the input layer 41 towards the output layer 43, they are processed into increasingly high-level features by the nonlinear computations at each layer. The final "hidden" layer $h_k$ (immediately before the output layer 43 of the neural network 4, provides an opaque, high-level description of the network's current state. This current state incorporates activations from the current token in the input prompt or stream, in addition to the current context (which includes attention signals as well as stateful information about the network's prior neural activations and its own output sequence). Modern neural networks can also include context vectors generated by the net-work's own outputs in response to a sequence of inputs (so-called autoregressive models) and an additional component that gives "attentional" weights to different parts of the input sequence (attention weights from so-called transformer models). Without loss of generality, the concept of the hidden state is extended to include not just the activations of the final hidden layer $h_k$, but also additional vector components representing any context and attentional values as well. It is noted here that "hidden state" and the vector notation $h$ are to be understood as indicating the sum-total of this generalized state vector. It is further noted that many modern neural network models consider sequences of inputs (where the inputs are given a temporal order). Given that the kernel function described below is over pairs of vectors $h, h'$, the question is raised of how to compute these vectors from an entire sequence of inputs, rather than a single input token. Again without loss of generality, evaluated is the probability that a new input sequence is plausible given the set of training sequences the model has already seen. In this way, the system and method disclosed herein applies equally to different neural network architectures including autoregressive (causal), seq2seq, and masked language models.

It is noted that for some network architectures, such as an autoregressive model, in an embodiment, the hidden state of the network $h_k$ is measured at the "bottleneck" layer (the layer of neurons encoding the latent space coordinates of the network's state) rather than the final layer of hidden units, together with additional context and attention vector components.

In an embodiment, a vectorized description of a deep neural network's state is implemented by measuring $h$ at the end of the sequence, i.e. after the last token of an input sequence has been input to the neural network 4. That is, for an input sequence of length $T$, $h$ is computed using concatenated vectors of the network hidden state, context, and attention after $T$ time steps. However, it is noted that many different ways of forming a vectorized state description are possible. As another example, it would be possible to calculate and take the average, over the entire sequence length, of $h$ when evaluating the kernel function.

To adopt a probabilistic interpretation of an LLM's outputs, assumed is a covariance structure over sequences emitted by the LLM. The covariance structure is defined by a kernel matrix. Below, described is the methodology to construct the kernel matrix, and how to use it to perform inference. Employed are Gaussian processes (David J.C. McKay, "Information Theory, Inference, and Learning Algorithms", Cambridge University Press, 2003), as a statistical framework for computing the probability or relative likelihood of certain events given a set of observed data points (a so-called nonparametric statistical model). In a Gaussian process, it is assumed that each observed data point is drawn from some underlying distribution or probability density, but with Gaussian noise (drawn from a normal distribution) added to each observed data point. This seemingly simple statistical process is suitable for modelling many naturally occurring phenomena and data sets while still being computationally tractable. Evaluating the probability density of a Gaussian process relies on the kernel trick, which avoids the explicit mapping that is needed to get linear learning algorithms to learn a nonlinear function or decision boundary. More specifically, this mathematical method specifies a kernel function $k(x, x')$ evaluated at two vectors $x$ and $x'$. Intuitively, the kernel function provides the similarity, or the distance in some vector space, between $x$ and $x'$. If there is a number of points $x_0 ... x_M$, the matrix of all pairwise evaluations of the kernel function is the kernel matrix $K$. Once a set of true sentences $S$ is established, either from labeled data or by sampling unlabeled sentences from the embedding space of the second generator model $M_g$, constructed is a kernel matrix $K_S$ that relates true sentences to each other. $K_S$ is a $|S| \times |S|$ positive semidefinite matrix; entry $k_{ij} \in K_S$ represents the kernel function $k(s_i \in S, s_j \in S)$ at sentences $s_i, s_j$. Intuitively, $k(s_i, s_j)$ represents the "similarity" of sentences $i$ and $j$ evaluated in a high-dimensional (possibly infinite-dimensional) space.

For example, the possible kernel function $k$ is defined as:

$$\mathbf{k}(s_i, s_j) = \eta_{M_d}(s_i)^\mathsf{T} \eta_{M_d}(s_j) \tag{2}$$

where $\eta M(x)$ represents the embedding vector (last-layer hidden unit activations) $\{h_k^0 ... h_k^N\}$ of the first generator model $M_d$ evaluated on input $X$ (input prompt sequence $X = \{x_0 ... x_T\}$ and model output up to time $T$, $y_0 ... y_{t-1}$).

Without loss of generality, $h(i)$ may also include other vector components to represent external factors, such as recurrent context signals resulting from prior activations (caused by other input tokens earlier in the sequence, tokens from the model's output so far in the sequence, and attention weights applied to the model in the case of a transformer neural net-work).

Assuming a Gaussian noise distribution in the embedding space of the second generator model $M_g$, the kernel matrix $K_S$ is interpreted as the covariance matrix of the distribution of positive (true) sentences that the model trained on.

For any given query sentence $s_q$, the Gaussian density $\kappa \sim \mathcal{N}(\mathbf{0}; K_S^{-1})$ can be evaluated at $s_q - \mu$ where $\mu$ is the mean of the embedding space vectors in the class of positive (true) examples for the second generator model $M_g$. That is, the embedding space of the language model is interpreted as a Gaussian process model according to McKay (see reference above) that can express subjective (Bayesian) probability that a token sequence emitted by the model is "truthful", in the sense that the sequence "looks like it" is drawn from the same distribution as the known truth used to train the model. Furthermore, new sentences that could be added to the training corpus can first be evaluated to see how "truthful" they appear to be, given the kernel induced by the current version of the model.

The mean hidden unit activation vector $\mu$ can be defined as:

$$\mu = \frac{1}{N} \sum_{i=1}^{N} (\mathbf{h}(i)) \tag{3}$$

where $h(i)$ is the vector of activations at the last hidden layer of the neural network evaluated at input $x(i)$. Given the kernel matrix $K$ and the mean vector $\mu$, the Gaussian density evaluated at a new input $x'$ is:

$$\mathcal{N}(\mu; \mathbf{K}_S^{-1}) = (2\pi)^{-\frac{k}{2}} \det(\mathbf{K}_S)^{-\frac{1}{2}} \exp\left(-\frac{1}{2}(\mathbf{x}' - \mu)^\mathsf{T} \mathbf{K}_S^{-1}(\mathbf{x}' - \mu)\right) \tag{4}$$

where $k$ is the number of dimensions.

This makes it possible to assign a probability $p \in [0 ... 1]$ to the proposition that $s_q$ is true. A hyperparameter $\theta \in [0 ... 1]$, e.g. set by human operator or an automated system, is used as a threshold for which query sentences are consider true or hallucinated. Correspondingly, $\theta$ can be parameterized so that it expresses confidence intervals or Bayesian credible interval rather than a probability density.

The effect of interpreting truth versus hallucinations is that query sentences that embed close to truthful training sentence examples are more likely to be labeled as truthful: the truth is located close to the set of known truthful sentences encountered during training.

Accordingly, to implement the probabilistic approach described above, the computer system 1 is configured to interpret the embedding vectors formed by the last hidden layer activations of a deep neural network (as used in the first generator model $M_d$ and the second generator model $M_g$) as points whose similarity can be evaluated using a kernel function, and whose interpretation using the formulation of Gaussian processes makes it possible to 1) filter out likely hallucinated outputs (because they "stray" too much from the embedding points induced by the initial training data, with their probability under the Gaussian process falling below a certain threshold), and 2) to "gate" new potential training data that is to be added to the training set: points can be excluded from the updated training set if their probability under the Gaussian process using kernel matrix $K$ is below a threshold.

Figure 15 shows how the embedding point $q_0^{h_k}$ induced by one query (query 0) is close to the density determined by the training data (dark points), while the embedding point $q_1^{h_k}$ induced by another query (query 1) is far from the probability density induced by the training data. In this case, the probability of $q_0^{h_k}$ is higher than that of $q_1^{h_k}$; selecting an appropriate probability threshold makes it possible to discard $q_1^{h_k}$ as a likely hallucination. It is to be noted that the $q$ points could be queries sent into the model (new training data), or could be outputs generated by the model itself. Another application of this probabilistic association with input queries is to "gate" new inputs: if the probability of a given $q$ is high enough (greater than some hyperparamter $\theta$), point $q$ can be admitted, along with any corresponding outputs (in a supervised setting), to a revised (expanded) version of the training corpus, retraining the model on this updated corpus (original data points plus new ones we have gated in) at some future time.

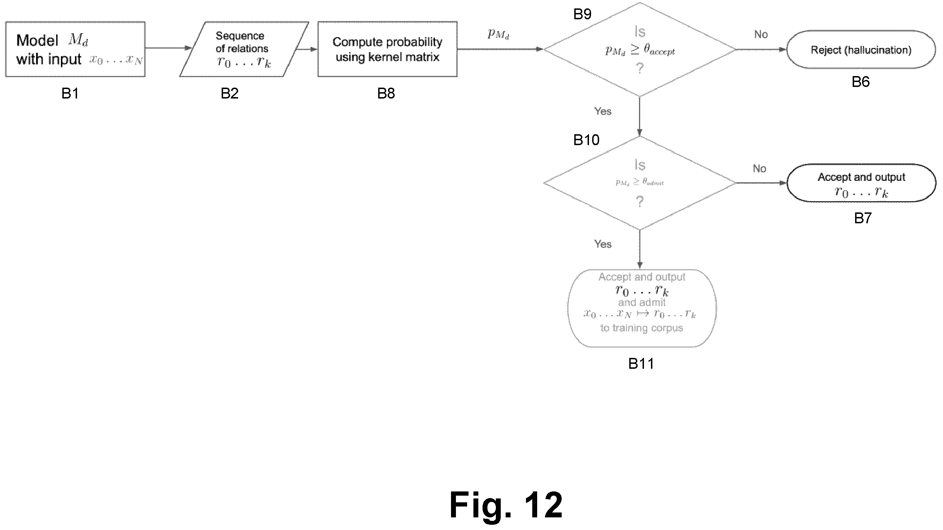

In the following paragraphs, described with reference to Figure 12 are possible sequences of steps (represented by blocks B1, B2 and B6-B11) performed by the one or more processors 10 of the computer system 1 for detecting and avoiding hallucinations in the output, using a probabilistic approach.

As illustrated in Figure 12, block B1 refers to the first generator model $M_d$ with input prompt (query) $X$ with a sequence of tokens $X = \{x_0 ... x_N\}$.

Block B2 refers to the sequence of relations $R = \{r_0 ... r_k\}$ from the knowledge graph $G$, derived for the input prompt $X = \{x_0 ... x_N\}$ by the computer system 1 using the first generator model $M_d$.

Block B8 refers to the computer system 1 computing a probability $p_{Md}$ using a kernel matrix $K$ determined for the first generator model $M_d$, as described above.

Block B9 refers to the computer system 1 checking whether the probability $p_{Md}$ determined in block B8 is above (or equal) the acceptance threshold $\theta_{accept}$. In case the probability $p_{Md}$ is below the acceptance threshold $\theta_{accept}$, the computer system 1 continues processing in block B6, and rejects the respective sequence of relations $R = \{r_0 ... r_k\}$, derived in block B2 for the input prompt $X = \{x_0 ... x_N\}$; otherwise, if the probability $p_{Md}$ is above (or equal) the acceptance threshold $\theta_{accept}$, the computer system 1 continues processing in block B10.

Block B10 refers to the computer system 1 checking whether the probability $p_{Md}$ determined in block B8 is above (or equal) a different (presumably higher) admittance threshold $\theta_{admit}$. In case the probability $p_{Md}$ is below the admittance threshold $\theta_{admit}$, the computer system 1 continues processing in block B7 and outputs the sequence of relations $R = \{r_0 ... r_k\}$ derived for the input prompt $X = \{x_0 ... x_N\}$; otherwise, if the probability $p_{Md}$ is above (or equal) the admittance threshold $\theta_{admit}$, the computer system 1 continues processing in block B11.

Block B11 refers to the computer system 1 not only outputting the sequence of relations $R = \{r_0 ... r_k\}$ derived for the input prompt $X = \{x_0 ... x_N\}$, but also admitting and adding the new examples $X = \{x_0 ... x_N\} \rightarrow R = \{r_0 ... r_k\}$ to the training corpus.

In an embodiment, the computer system 1 is further configured to provide safeguards against allowing one customer's data to influence model outputs to another customer, e.g. in cloud-based configurations of computer system 1, where users associated with or as different customers access different knowledge bases with different knowledge graphs $G$, hosted by the computer system 1. In such scenarios and in cases where the models are trained on data from multiple sources $\eta_0 ... n_{k-1}$, e.g. trained on data from competing companies $0 ... k - 1$, who do not want their data exposed to competitors, the kernel method can be used to exclude data from any arbitrary combination of sources in determining truth versus hallucination. This may be advantageous if, for example, some subsets of training data contain facts that should not be known to certain users of the system, or if certain truthful sentences from the training corpus are only in fact truthful in certain meta-contexts that do not always hold and thus should be excluded in those circumstances. In such scenarios and configurations, certain points are excluded from the kernel matrix, omitting their rows and columns from $K$ and recomputing $\mu$ to also exclude those points. Because omitting a block from a positive semidefinite matrix still results in the remaining subblocks of the matrix still being positive semidefinite, it can be guaranteed that the reduced-rank matrix that results is still invertible and hence can be used to evaluate the Gaussian process model.

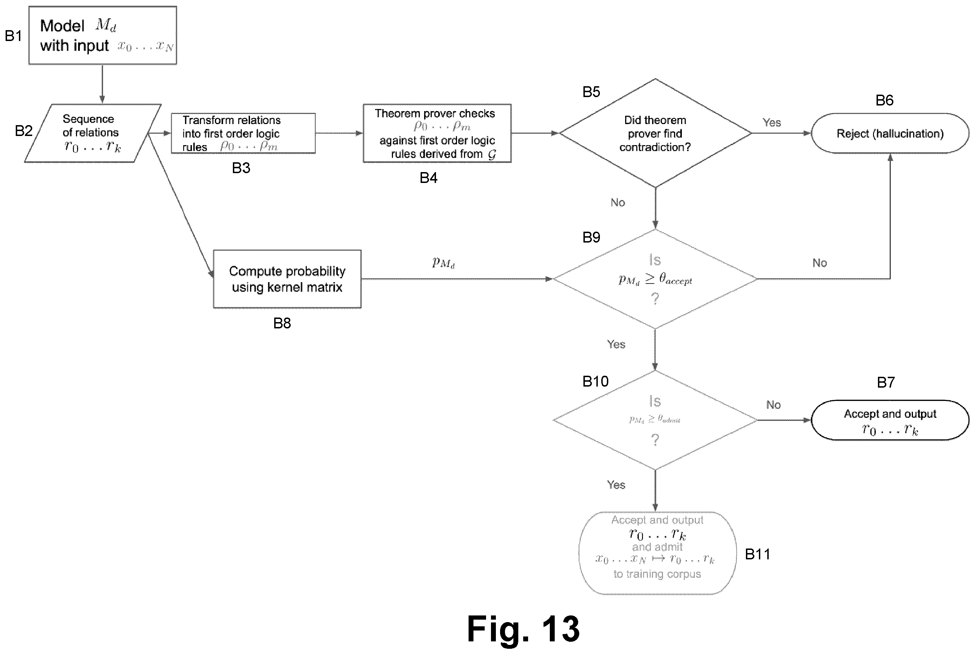

Figure 13 illustrates a possible sequence of steps for detecting and avoiding hallucinations combining the method using first order logic, as described above with reference to Figure 11, and the probabilistic method, using a kernel matrix, as described above with reference to Figure 12 (identical reference numerals refer to corresponding blocks or steps, respectively).

In this combined approach, the first-order logic rules derived from the knowledge graph G and the kernel-matrix are used in a complementary way to ensure that hallucinations do not propagate to the output. As described above, for an input sequence $X = \{x_0 ... x_N\}$, using the first generator model $M_d$, the computer system 1 generates an output sequence of relations $R = \{r_0 ... r_k\}$ from the knowledge graph $G$, and transforms this sequence of relations $R = \{r_0 ... r_k\}$ into a set of first-order logic propositions $\{r_0 ... r_m\}$. Outputs are suppressed as hallucinatory, if a first-order logic theorem prover detects a contradiction of the derived rules against the first-order logic rules extracted from the existing knowledge graph $G$. Furthermore, the output of the sequence $R = \{r_0 ... r_k\}$ is suppressed, if the probability (assessed using the kernel matrix for the first generator model $M_d$) of the sequence $R = \{r_0 ... r_k\}$ is below an acceptance threshold $\theta_{accept}$. Similarly, the new training mappings of sentences and logical relations $X = \{x_0 ... x_N\} \rightarrow R = \{r_0 ... r_k\}$ are optionally admitted to the training corpus, if the probability of the sequence $R = \{r_0 ... r_k\}$ exceeds a different (presumably higher) admittance threshold $\theta_{admit}$. For example, the computer system 1 may consider to accept a training mapping for admittance as outlined below: "Electrical panel #23 must be installed before completing the wiring task on the third floor." maps to the following relations: Location_of_task(Wiring_task, Floor_3)

Must_complete_before(Installation_task_electrical_panel_23, Wiring_task).

As outlined in the introduction, construction software encompasses a diverse set of products with little interoperability and with widely varying representations for data. For example, popular software suites, such as Procore, offer project management software that stores data in structured tables (like a SQL database) and in unstructured documents (drawings, text descriptions, etc.). Project management software such as this also includes "time-structured" planning documents, such as Gantt charts. Computer Aided Design (CAD) and Building Information Modeling (BIM) systems such as Revit store structured, high-dimensional planning data that depict the intended physical layout of a building. Financial systems hold structured financial information, typically stored in tabular form, and documents or images that show invoices. Customer relationship software (CRM), e.g. from SAP (Systems Applications and Products) and other providers, tracks relationships to subcontractors and customers. Time-card and employment software stores structured data on personnel, hours worked, etc. General-purpose documentation suites such as Microsoft Office 365, Microsoft Share-Point, Google Drive, etc. store electronic documents, spreadsheets and presentations. Email systems such as Microsoft Outlook and Google GMail are used to exchange information. Storage systems such as Dropbox can store any sort of information. Moreover, often, data for construction planning, financials, etc. is stored redundantly in several different systems. This creates problems of i) error (due to multiple data entry); ii) lost time and expenditure maintaining several different systems; and iii) lost time finding relevant information.

The disclosed computer system 1 combines this structured and unstructured data, and ensures the truthfulness of the models and query responses generated. This is particularly critical for construction applications because any generated information must conform to real-world constraints. Examples of specific applications include: generating automatic progress reports based on photos, text messages, and emails recorded during project execution; generating a Gantt chart with a hierarchical description of how to install the electrical system throughout a large high-rise building; answering queries and questions from a general contractor such as, "Does the specification document of the plumbing system in the building match the draft plan drawing sent by the plumbing contractor? "

It should be noted that, in the description, the sequence of the steps has been presented in a specific order, one skilled in the art will understand, however, that the order of at least some of the steps could be altered, without deviating from the scope of the disclosure.

**Claims**

1. A computer system (1) for processing construction data, the computer system (1) comprising one or more processors (10) configured to execute the following steps:

   receiving (S1) from a user a query related to a construction knowledge base comprising structured construction data, arranged in a knowledge graph ($G$) with nodes and edges, the nodes representing entities and the edges representing relations between the entities;
   mapping (S2) the query to a set of entity relations for the query, using a first generator model ($M_d$) trained to map unstructured construction data, not defined with entity relations, to structured entity relations;
   retrieving (S3) from the knowledge graph (G) a subgraph, using the set of entity relations for the query;

mapping (S4) the subgraph to unstructured data as output for the query, using a second generator model ($M_g$) trained to map structured entity relations to unstructured construction data, wherein the second generator model ($M_g$) is inverse to the first generator model ($M_d$), and the first generator model ($M_d$) and the second generator model ($M_g$) are trained for cycle consistency, whereby structured entity relations output by the first generator model ($M_d$) are input to the second generator model ($M_g$), and unstructured data output by the second generator model ($M_g$) is input to the first generator model ($M_d$); and

providing (S5) to the user the unstructured data output for the query.

2. The computer system (1) of claim 1, wherein the query comprises natural language input, and the one or more processors (10) are configured to map the natural language input to a sequence of tokens, to use the first generator model ($M_d$) to map the sequence of tokens to a set of knowledge graph triples defining the entity relations, and to use the second generator model ($M_g$) to map the subgraph to a sequence of tokens defining natural language output for the query.

3. The computer system (1) of claim 1, wherein the query comprises query input with at least one of: words of natural language, images, floor plans, architectural drawings, technical drawings, time-dependent graphs, measurement data, audio recordings, or video recordings, and the one or more processors (10) are configured to map the query input to a sequence of multimodal tokens, to use the first generator model ($M_d$) to map the sequence of multimodal tokens to a set of knowledge graph triples defining the entity relations, and to use the second generator model ($M_g$) to map the subgraph to a sequence of multimodal tokens defining the unstructured data output for the query, the unstructured data output for the query comprising at least one of: words of natural language, images, floor plans, architectural drawings, technical drawings, time-dependent graphs, audio files or video files.

4. The computer system (1) of one of claims 1 to 3, wherein the one or more processors (10) are configured to denote each of the entities and the relations in the knowledge graph ($G$) with a unique token sequence.

5. The computer system (1) of one of claims 1 to 4, wherein the one or more processors (10) are configured to train the first generator model ($M_d$) and the second generator model ($M_g$) using a plurality of samples with subgraphs from a training data knowledge graph ($G$), by mapping the sample subgraph of each sample to a respective sample output with unstructured data, using the second generator model ($M_g$), mapping the sample output with the unstructured data to a sample set of entity relations, using the first generator model ($M_d$), and forcing minimal differences between the sample subgraphs and the respective sample sets of entity relations.

6. The computer system (1) of one of claims 1 to 5, wherein the one or more processors (10) are configured to train the first generator model ($M_d$) and the second generator model ($M_g$) using a plurality of samples of unstructured training data, by mapping the unstructured training data of each sample to a respective output set of entity relations, using the first generator model ($M_d$), mapping the output set of entity relations to a sample output with unstructured data, using the second generator model ($M_g$), and forcing minimal differences between the samples of unstructured training data and the sample output with the unstructured data.

7. The computer system (1) of one of claims 1 to 6, wherein the one or more processors (10) are configured to train the first generator model ($M_d$) and the second generator model (Mg) using positive reference data, including at least one of: truthful entity relations or truthful unstructured reference data, negative reference data, including at least one of: false entity relations or false unstructured reference data, and anchor data including pairs of truthful entity relations matched with corresponding truthful unstructured reference data.

8. The computer system (1) of one of claims 1 to 7, wherein the one or more processors (10) are configured to transform the knowledge graph ($G$) into a set of first-order logic rules, to execute a first-order logic theorem prover to detect contradictions between the set of first-order logic rules derived from the knowledge graph ($G$) and first-order propositions of the subgraph retrieved for the query from the knowledge graph ($G$), and to discard the subgraph if contradictions are detected by the first-order logic theorem prover.

9. The computer system (1) of one of claims 1 to 8, wherein the first generator model ($M_d$) comprises a neural network, the second generator model ($M_g$) comprises a neural net-work, and the one or more processors (10) are configured to determine reliability of output generated by one of the neural networks for a current input to the respective neural network, based on vectorized state information of the respective neural network, the vectorized state information including at least an embedding vector formed by last hidden layer activations of the respective neural network, and to discard the output from the respective neural network if said output is **characterized by** vectorized state information which has a similarity below a defined similarity threshold with respect to vectorized state information produced by the respective neural network for truthful training data.

10. The computer system (1) of claim 9, wherein the one or more processors (10) are configured to determine the reliability of output generated by one of the neural networks for an input sequence to the respective neural network, based on vectorized state information generated from a series of the vectorized state information produced by the respective neural network for the input sequence.

11. The computer system (1) of one of claims 8 or 9, wherein the one or more processors (10) are configured to generate a kernel matrix, the kernel matrix relating pairwise truthful sentences to each other, indicating a similarity between pairs of truthful sentences based on embedding vectors formed by last hidden layer activations of the respective neural network for the truthful sentences, and to determine the similarity of vectorized state information, using the kernel matrix.

12. A computer-implemented method of processing construction data, comprising the following steps:

receiving (S1) from a user a query related to a construction knowledge base comprising structured construction data, arranged in a knowledge graph ($G$) with nodes and edges, the nodes representing entities and the edges representing relations between the entities;
mapping (S2) the query to a set of entity relations for the query, using a first generator model ($M_d$) trained to map unstructured construction data, not defined with entity relations, to structured entity relations;
retrieving (S3) from the knowledge graph ($G$) a subgraph, using the set of entity relations for the query;
mapping (S4) the subgraph to unstructured data as output for the query, using a second generator model (Mg) trained to map structured entity relations to unstructured construction data, wherein the second generator model ($M_g$) is inverse to the first generator model ($M_d$), and the first generator model ($M_d$) and the second generator model ($M_g$) are trained for cycle consistency, whereby structured entity relations output by the first generator model ($M_d$) are input to the second generator model ($M_g$), and unstructured data output by the second generator model ($M_g$) is input to the first generator model ($M_d$); and
providing (S5) to the user the unstructured data output for the query.

13. The computer-implemented method of claim 12, wherein the query comprises query input with at least one of: words of natural language, images, floor plans, architectural drawings, technical drawings, time-dependent graphs, measurement data, audio recordings, or video recordings; and the method comprises mapping the query input to a sequence of multimodal tokens, using the first generator model ($M_d$) to map the sequence of multimodal tokens to a set of knowledge graph triples defining the entity relations, and using the second generator model ($M_g$) to map the subgraph to a sequence of multimodal tokens defining the unstructured data output for the query, the unstructured data output for the query comprising at least one of: words of natural language, images, floor plans, architectural drawings, technical drawings, time-dependent graphs, audio files or video files.

14. A computer program product comprising a non-transitory computer readable medium having stored thereon computer program code configured to direct one or more processors (10) of a computer system (1) to perform the following steps:

receiving (S1) from a user a query related to a construction knowledge base comprising structured construction data, arranged in a knowledge graph ($G$) with nodes and edges, the nodes representing entities and the edges representing relations between the entities;
mapping (S2) the query to a set of entity relations for the query, using a first generator model ($M_d$) trained to map unstructured construction data, not defined with entity relations, to structured entity relations;
retrieving (S3) from the knowledge graph ($G$) a subgraph, using the set of entity relations for the query;
mapping (S4) the subgraph to unstructured data as output for the query, using a second generator model ($M_g$) trained to map structured entity relations to unstructured construction data, wherein the second generator model ($M_g$) is inverse to the first generator model ($M_d$), and the first generator model ($M_d$) and the second generator model ($M_g$) are trained for cycle consistency, whereby structured entity relations output by the first generator model ($M_d$) are input to the second generator model ($M_g$), and unstructured data output by the second generator model ($M_g$) is input to the first generator model ($M_d$); and
providing (S5) to the user the unstructured data output for the query.

15. The computer program product of claim 14, wherein the query comprises query input with at least one of: words of natural language, images, floor plans, architectural drawings, technical drawings, time-dependent graphs, or other data file content; and the method comprises mapping the query input to a sequence of multimodal tokens, using the first generator model ($M_d$) to map the sequence of multimodal tokens to a set of knowledge graph triples defining the entity relations, and using the second generator model ($M_g$) to map the subgraph to a sequence of multimodal tokens defining the unstructured data output for the query, the unstructured data output for the query comprising at least one of: words of natural language, images, floor plans, architectural drawings, technical drawings, time-dependent graphs, or other data file content.

**Fig. 1**

RECEIVE QUERY

S1

MAP QUERY

S2

RETRIEVE SUBGRAPH

S3

MAP SUBGRAPH

S4

OUTPUT FOR QUERY

S5

**Fig. 2**

EP 4 641 450 A1

## Fig. 3

$$X \Rightarrow M_d \Rightarrow \hat{R} \Rightarrow S3 \Rightarrow Z \Rightarrow M_g \Rightarrow Y$$

G

S1  S2  S4

## Fig. 4

$$x_0\,x_1\ldots x_m \Rightarrow M_d \Rightarrow \hat{r}_1\,\hat{r}_2 \cdots \hat{r}_l$$

Select $k \leq l$ matches
for $i = 1 \to l$ do
    $r_i \leftarrow$ FindClosestMatch$(\hat{r}_i)$
    if match score of $r_i >$ threshold then
        Select $r_i$
    end if
end for

$$r_1\,r_2 \cdots r_k \Rightarrow M_g \Rightarrow y_0\,y_1\ldots y_n$$

S1  S2  S3  S4

X  $\hat{R}$  Z  Y

**Fig. 5**

**Fig. 6**

Fig. 7

Fig.8

# Fig. 9

$T$

↓ S13

$Y$ ←→ S16 ↔ $\hat{Y}$

↑ S15

↓ $M_d$ → $M_g$

S14

$\hat{R}$

# Fig.10

$T$

S13 — Sample from unstructured data

$Y$ : $y_0$ $y_1$ $y_2$ ... $y_n$

$M_d$

S14

$\hat{r}_1$ $\hat{r}_2$ $\hat{r}_3$ ... $\hat{r}_k$

$L_{cyc}^{backwards}$ S16

$\hat{Y}$ : $\hat{y}_0$ $\hat{y}_1$ $\hat{y}_2$ ... $\hat{y}_n$

$M_g$

S15

$\hat{R}$

B1

Model $M_d$ with input $x_0 \ldots x_N$

B2

Sequence of relations $r_0 \ldots r_k$

B3

Transform relations into first order logic rules $\rho_0 \ldots \rho_m$

B4

Theorem prover checks $\rho_0 \ldots \rho_m$ against first order logic rules derived from $\mathcal{G}$

B5

Did theorem prover find contradiction?

Yes

B6

Reject (hallucination)

No

B7

Accept and output $r_0 \ldots r_k$

Fig. 11

EP 4 641 450 A1

Fig. 12

B1 — Model $M_d$ with input $x_0 \ldots x_N$

B2 — Sequence of relations $r_0 \ldots r_k$

B3 — Transform relations into first order logic rules $\rho_0 \ldots \rho_m$

B4 — Theorem prover checks $\rho_0 \ldots \rho_m$ against first order logic rules derived from $\mathcal{G}$

B5 — Did theorem prover find contradiction?

Yes → B6 — Reject (hallucination)

No →

B8 — Compute probability using kernel matrix → $p_{M_d}$

B9 — Is $p_{M_d} \geq \theta_{accept}$ ?

No → B6 — Reject (hallucination)

Yes →

B10 — Is $p_{M_d} \geq \theta_{admit}$ ?

No → B7 — Accept and output $r_0 \ldots r_k$

Yes → B11 — Accept and output $r_0 \ldots r_k$ and admit $x_0 \ldots x_N \mapsto r_0 \ldots r_k$ to training corpus

**Fig. 13**

Input layer      Hidden layers   $h_0 \ldots h_k$      Output layer

$h_k^0$
$h_k^1$
$h_k^2$
$h_k^3$
$h_k^4$
$h_k^5$

$\cdots$

41        4        42        43

# Fig. 14

Embedding space induced by last
hidden layer (2D projection)

$\theta$

$q_0^{h_k}$        $q_1^{h_k}$

# Fig. 15

| | Europäisches Patentamt European Patent Office Office européen des brevets | **EUROPEAN SEARCH REPORT** | **Application Number** EP 25 16 9723 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LIANG XU ET AL: "Nanjing Yunjin intelligent question-answering system based on knowledge graphs and retrieval augmented generation technology", HERITAGE SCIENCE, BIOMED CENTRAL LTD, LONDON, UK, vol. 12, no. 1, 9 April 2024 (2024-04-09), pages 1-23, XP021335187, DOI: 10.1186/S40494-024-01231-3 * page 1 - page 21 * | 1-15 | INV. G06N5/022 G06N3/042 G06N3/045 G06N3/0475 G06Q10/00 G06F40/00 ADD. G06F40/56 G06F40/284 |
| A | ZHUO CHEN ET AL: "The Power of Noise: Toward a Unified Multi-modal Knowledge Graph Representation Framework", ARXIV.ORG, CORNELL UNIVERSITY LIBRARY, 201 OLIN LIBRARY CORNELL UNIVERSITY ITHACA, NY 14853, 20 March 2024 (2024-03-20), XP091704860, * figure 2 * * section 3 * | 3,13,15 | |

-----

-/--

| | | |
|---|---|---|
| | | TECHNICAL FIELDS SEARCHED (IPC) |
| | | G06N G06F G06Q |

The present search report has been drawn up for all claims

| Place of search | Date of completion of the search | Examiner |
|---|---|---|
| The Hague | 21 August 2025 | Rousset, Antoine |

EPO FORM 1503 03.82 (P04C01)

page 1 of 2

Europäisches
Patentamt

European
Patent Office

Office européen
des brevets

**EUROPEAN SEARCH REPORT**

**Application Number**

EP 25 16 9723

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SAKA ABDULLAHI ET AL: "GPT models in construction industry: Opportunities, limitations, and a use case validation", DEVELOPMENTS IN THE BUILT ENVIRONMENT , vol. 17 12 December 2023 (2023-12-12), page 100300, XP093185015, ISSN: 2666-1659, DOI: 10.1016/j.dibe.2023.100300 Retrieved from the Internet: URL:https://pdf.sciencedirectassets.com/77 6469/1-s2.0-S2666165923X00052/1-s2.0-S2666 165923001825/main.pdf?X-Amz-Security-Token =IQoJb3JpZ2luX2VjEKb/////////wEaCXVzLWVhc 3QtMSJGMEQCIEfCJ5oX0iIUPmW/LEOhAgQeI2UC11s zWqF+pXjPW4t4AiA6kpO9FOy97vSFdt6FEAytkueyk AojNigL+vhwb536xiqzBQhuEAUaDDA1OTAwMzU0Njg 2NSIM4N6XC [retrieved on 2024-07-11] * page 1 - page 29 * ----- | 1-15 | |

| | | | TECHNICAL FIELDS SEARCHED (IPC) |
|---|---|---|---|

The present search report has been drawn up for all claims

| Place of search | Date of completion of the search | Examiner |
|---|---|---|
| The Hague | 21 August 2025 | Rousset, Antoine |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MINKI KANG** ; **JIN MYUNG KWAK** ; **JINHEON BAEK** ; **SUNG JU HWANG**. *Knowledge graph-augmented language models for knowledge-grounded dialogue generation*, 2023, https://doi.org/10.48550/arXiv.2305.188462023
- Why do we need large batch sizes in contrastive learning? a gradient-bias perspective. **CHANGYOU CHEN** ; **JIANYI ZHANG** ; **YI XU** ; **LIQUN CHEN** ; **JIALI DUAN** ; **YIRAN CHEN** ; **SON DINH TRAN** ; **BELINDA ZENG** ; **TRISHUL CHILIMBI**. Advances in Neural Information Processing Systems. 2022
- **YUHAO YANG** ; **CHAO HUANG** ; **LIANGHAO XIA** ; **CHENLIANG LI**. Knowledge graph contrastive learning for recommendation. *SIGIR '22: Proceedings of the 45th International ACM SIGIR Conference on Research and Development in Information Retrieval*, July 2022, 1434-1443, https://doi.ora/10.1145/3477495.3532009
- **YANRU QU** ; **DINGHAN SHEN** ; **YELONG SHEN** ; **SANDRA SAJEEV** ; **WEIZHU CHEN** ; **JIAWEI HAN**. Coda: Contrast-enhanced and diversity-promoting data augmentation for natural language understanding. *International Conference on Learning Representations*, 2021, https://openreview.net/forum?id=Ozk9MrX1hvA
- **DINGHAN SHEN** ; **MINGZHI ZHENG** ; **YELONG SHEN** ; **YANRU QU** ; **WEIZHU CHEN**. *A simple but tough-to-beat data augmentation approach for natural language understanding and generation*, September 2020, https://doi.org/10.48550/arXiv.2009.13818
- A Concise Introduction to Mathematical Logic. **W. RAUTENBERG**. Universitext. Springer, 2010

- **ZEFAN ZENG** ; **QING CHENG** ; **YUEHANG SI**. Logical rule-based knowledge graph reasoning: A comprehensive survey. *Mathematics*, 2023, vol. 11 (21), 4486
- Cycle representation learning for inductive relation prediction. **ZUOYU YAN** ; **TENGFEI MA** ; **LIANGCAI GAO** ; **ZHI TANG** ; **CHAO CHEN**. Proceedings of the 39th International Conference on Machine Learning. 17 July 2022, vol. 162, 24895-24910
- **MENG QU** ; **JUNKUN CHEN** ; **LOUIS-PASCAL XHONNEUX** ; **YOSHUA BENGIO** ; **JIAN TANG**. Rnnlogic: Learning logic rules for reasoning on knowledge graphs. *arXiv:2010.04029*, 2020
- **KEWEI CHENG** ; **JIAHAO LIU** ; **WEI WANG** ; **YIZHOU SUN**. Rlogic: Recursive logical rule learning from knowledge graphs. *Proceedings of the 28th ACM SIGKDD Conference on Knowledge Discovery and Data Mining*, 2022, 179-189
- **WEN ZHANG** ; **BIBEK PAUDEL** ; **LIANG WANG** ; **JIAOYAN CHEN** ; **HAI ZHU** ; **WEI ZHANG** ; **ABRAHAM BERNSTEIN** ; **HUAJUN CHEN**. Iteratively learning embeddings and rules for knowledge graph reasoning. *The world wide web conference*, 2019, 2366-2377
- **LUYI BAI** ; **WENTING YU** ; **DIE CHAI** ; **WENJUN ZHAO** ; **MINGZHUO CHEN**. Temporal knowledge graphs reasoning with iterative guidance by temporal logical rules. *Information Sciences*, 2023, vol. 621, 22-35
- **DAVID J.C. MCKAY**. Information Theory, Inference, and Learning Algorithms. Cambridge University Press, 2003